# EUROPEAN PATENT SPECIFICATION

(11) **EP 4 109 800 B1**
(45) Date of publication and mention of the grant of the patent: **28.01.2026**
(21) Application number: 20925443.2
(22) Date of filing: 17.03.2020
(51) Int. Cl.: H04L 5/00

(54) **COMMUNICATION METHOD AND APPARATUS, AND DEVICE**
KOMMUNIKATIONSVERFAHREN UND -VORRICHTUNG SOWIE VORRICHTUNG
PROCÉDÉ ET APPAREIL DE COMMUNICATION, ET DISPOSITIF ASSOCIÉ

(43) Date of publication of application: 28.12.2022
(73) Proprietor: Huawei Technologies Co., Ltd., Shenzhen, Guangdong 518129, (CN)
(72) Inventor: ZHANG, Zhanzhan, Shenzhen, Guangdong 518129 (CN); TIE, Xiaolei, Shenzhen, Guangdong 518129 (CN); ZHOU, Han, Shenzhen, Guangdong 518129 (CN); HUA, Meng, Shenzhen, Guangdong 518129 (CN)
(74) Representative: MERH-IP Matias Erny Reichl Hoffmann Patentanwälte PartG mbB
(86) International application number: PCT/CN2020/079726
(87) International publication number: WO 2021/184200

(56) References cited:
- WO-A1-2021/182854
- CN-A- 109 151 988
- CN-A- 110 392 991
- CN-A- 110 831 197
- US-A1- 2019 394 747
- VIVO: ""On UE Power Consumption Reduction in RRM Measurements, R1-1810415", 3GPP TSG RAN WG1 MEETING #94BIS, 12 October 2018 (2018-10-12), XP051517824
- CATT: ""UE Power saving scheme for RRM measurements, R1-1812643", 3GPP TSG RAN WG1 MEETING #95, 16 November 2018 (2018-11-16), XP051478885

## Description

### TECHNICAL FIELD

This application relates to the field of communication technologies, and in particular, to a communication method, apparatus, and device.

### BACKGROUND

In a new radio (new radio, NR) technology, a terminal device (or referred to as user equipment (user equipment, UE)) in a radio resource control idle (radio resource control idle, RRC_IDLE) mode or an RRC inactive (RRC_INACTIVE) mode mainly completes two tasks: paging (Paging) message monitoring and radio resource management (radio resource management, RRM) measurement.

Currently, the terminal device has high power consumption for performing paging message monitoring and RRM measurement. Therefore, how to reduce power consumption caused by paging message monitoring and RRM measurement is an urgent problem that needs to be resolved.
Document US 2019/394747 A1 discloses techniques for utilizing synchronization signal blocks for positioning operations. In an aspect, a transmission point configures a set of synchronization signal blocks to be used as positioning measurement signals, each of the plurality of synchronization signal blocks comprising a primary synchronization signal, a secondary synchronization signal, and one or more physical broadcast channel signals, and transmits the set of synchronization signal blocks on a wireless downlink channel to enable a user device to perform a positioning measurement of at least one of the set of synchronization signal blocks. In an aspect, the user device receives, from the transmission point, the plurality of synchronization signal blocks on the wireless downlink channel, receives, from the transmission point, an indication of the set of synchronization signal blocks to be used as positioning measurement signals, and performs a positioning measurement of at least one of the set of synchronization signal blocks.

### SUMMARY

This application provides a communication method, apparatus, and device, to resolve a problem of high power consumption when a terminal device performs paging message monitoring and RRM measurement in the conventional technology. This can reduce power consumption when a terminal device in an RRC idle mode or an RRC inactive mode performs AGC tuning, time/frequency tracking, RRM measurement, beam management, or the like, and help improve processing performance of the terminal device. In addition, when availability of a reference signal changes, the terminal device does not need to re-obtain configuration information of the reference signal for an RRC connected mode. This can reduce configuration signaling overheads for the RRC idle/inactive mode. In particular, embodiments of the present application are defined by the independent claims. Additional features of embodiments of the invention are presented in the dependent claims. In the following, parts of the description and drawings referring to former embodiments which do not necessarily comprise all features to implement embodiments of the claimed invention are not represented as embodiments of the invention but as examples useful for understanding the embodiments of the invention. Embodiments of the present application (or the present disclosure) provide communication methods, an apparatus and a computer readable storage medium.

### BRIEF DESCRIPTION OF DRAWINGS

FIG. 1 is a schematic diagram of an architecture of a communication system;
FIG. 2 is a schematic diagram of an occasion of an SSB and a paging occasion PO in a paging DRX cycle;
FIG. 3 is a schematic diagram in which a network device sends a CSI-RS and an SSB to a terminal device;
FIG. 4 is a signaling flowchart of a communication method according to an embodiment of this application;
FIG. 5 is a schematic diagram of a reference signal including a CSI-RS and an SSB according to an embodiment of this application;
FIG. 6 is a schematic diagram of a relationship among a first information bit, an SSB, and a reference signal according to an embodiment of this application;
FIG. 7 is a schematic diagram of a bitmap in a second message according to an embodiment of this application;
FIG. 8 is a schematic diagram of another bitmap in a second message according to an embodiment of this application;
FIG. 9 is a schematic diagram of a reference signal according to an embodiment of this application;
FIG. 10 is a schematic diagram of another reference signal according to an embodiment of this application;
FIG. 11 is a schematic diagram of first duration according to an embodiment of this application;
FIG. 12 is a schematic diagram of first duration according to another embodiment of this application;
FIG. 13 is a schematic diagram of first duration according to still another embodiment of this application;
FIG. 14 is a schematic diagram of first duration according to yet another embodiment of this application;
FIG. 15 is a schematic diagram of first duration according to still yet another embodiment of this application;
FIG. 16 is a schematic diagram of first duration according to a further embodiment of this application;
FIG. 17 is a schematic diagram of first duration according to a still further embodiment of this application;
FIG. 18 is a schematic diagram of a structure of a communication apparatus according to an embodiment of this application;
FIG. 19 is a schematic diagram of a structure of another communication apparatus according to an embodiment of this application;
FIG. 20 is a schematic diagram of a structure of still another communication apparatus according to an embodiment of this application;
FIG. 21 is a schematic diagram of a structure of yet another communication apparatus according to an embodiment of this application;
FIG. 22 is a schematic diagram of a structure of still yet another communication apparatus according to an embodiment of this application;
FIG. 23 is a schematic diagram of a structure of a further communication apparatus according to an embodiment of this application;
FIG. 24 is a schematic diagram of a structure of a still further communication apparatus according to an embodiment of this application;
FIG. 25 is a schematic diagram of a structure of a terminal device according to an embodiment of this application; and
FIG. 26 is a schematic diagram of a structure of a network device according to an embodiment of this application;

### DESCRIPTION OF EMBODIMENTS

In this application, "at least one" refers to one or more, and "a plurality of" refers to two or more. The term "and/or" describes an association relationship between associated objects and may indicate three relationships. For example, A and/or B may indicate the following cases: Only A exists, both A and B exist, and only B exists, where A and B may be singular or plural. The character "/" usually represents an "or" relationship between the associated objects. "At least one of the following items (pieces)" or a similar expression thereof refers to any combination of these items, including any combination of singular items (pieces) or plural items (pieces). For example, at least one of a, b, or c may represent: a, b, c, a combination of a and b, a combination of a and c, a combination of b and c, or a combination of a, b and c, where each of a, b, and c may be in a singular form or a plural form. In addition, terms "first" and "second" are merely used for a purpose of description, and shall not be understood as an indication or implication of relative importance.

This application may be used in a wireless communication system. It should be noted that the wireless communication system mentioned in this application includes but is not limited to a narrowband Internet of things (Narrow Band-Internet of Things, NB-IoT) system, a long term evolution (Long Term Evolution, LTE) system, a 5th generation mobile communication technology (5th generation mobile communication technology, 5G) system (for example, a new radio system), and a next generation wireless communication system.

A communication apparatus in this application mainly includes a network device and a terminal device.

A network device may be a base station, an access point, or an access network device, or may be a device that communicates with a terminal device through one or more sectors on an air interface in an access network. The network device may be configured to perform a conversion between a received over-the-air frame and an IP packet, and serve as a router between a wireless terminal and a remaining part of the access network. The remaining part of the access network may include an Internet protocol (IP) network. The network device may further coordinate attribute management of the air interface. For example, the network device may be an evolved NodeB (Evolutional Node B, eNB or eNodeB) in long term evolution (Long Term Evolution, LTE), a relay station, a transmission/reception point (Tx/Rx Point, TRP), a base station in a 5G network, for example, a gNB, or a next-generation network. This is not limited herein.

A terminal device may be a wireless terminal or a wired terminal. The wireless terminal may be a device that provides a user with voice and/or other service data connectivity, a handheld device with a wireless connection function, or another processing device connected to a wireless modem. The wireless terminal may communicate with one or more core networks through a RAN. The wireless terminal may be a mobile terminal, for example, a mobile phone (or referred to as a "cellular" phone), or a computer with the mobile terminal, for example, a portable, pocket-sized, handheld, computer built-in, or vehicle-mounted mobile apparatus, which exchanges voice and/or data with a radio access network. For example, it may be a device such as a personal communication service (Personal Communication Service, PCS) phone, a cordless phone, a session initiation protocol (Session Initiation Protocol, SIP) phone, a wireless local loop (Wireless Local Loop, WLL) station, or a personal digital assistant (Personal Digital Assistant, PDA). The wireless terminal may also be referred to as a system, a subscriber unit (Subscriber Unit), a subscriber station (Subscriber Station), a mobile station (Mobile Station), a mobile console (Mobile), a remote station (Remote Station), a remote terminal (Remote Terminal), an access terminal (Access Terminal), a user terminal (User Terminal), a user agent (User Agent), or user equipment (User Device or User Equipment). This is not limited herein.

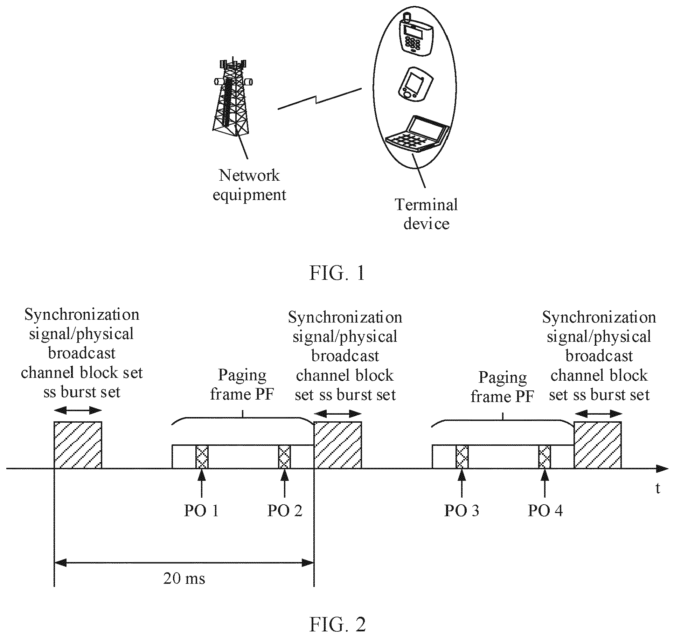

FIG. 1 is a schematic diagram of an architecture of a communication system. As shown in FIG. 1, the communication system in this application may include at least one network device and at least one terminal device. The network device communicates with the terminal device.

Generally, a terminal device in an RRC idle mode or an RRC inactive mode mainly completes two tasks: paging message monitoring and RRM measurement.

On one hand, to monitor a paging physical downlink control channel (physical downlink control channel, PDCCH), the terminal device generally performs operations such as time/frequency tracking (time/frequency tracking), automatic gain control tuning (automatic gain control, AGC tuning), or beam selection (beam selection).

For paging message monitoring, the network device configures a paging discontinuous reception cycle (discontinuous reception cycle, DRX cycle) for the terminal device. Generally, in a paging DRX cycle, the terminal device may monitor a paging message on a paging occasion (paging occasion, PO), and may enter a sleep state and do not monitor the paging message on another occasion. The paging occasion PO of the terminal device is determined by an identification (identification, ID) of the terminal device. Generally, different terminal devices may have different paging occasions POs for monitoring the paging message.

For the terminal device in the RRC idle mode or the RRC inactive mode, because the terminal device has entered a sleep state, the network device may broadcast a reference signal (the reference signal is usually a synchronization signal/physical broadcast channel block (synchronization signal/physical broadcast channel block, SSB)) to the terminal device, so that the terminal device performs AGC tuning and time-frequency synchronization based on the SSB, to wake up and monitor the paging message on the paging occasion PO corresponding to the terminal device. For example, the terminal device may perform operations such as AGC tuning or time-frequency synchronization based on a primary synchronization signal (primary synchronization signal, PSS) and/or a secondary synchronization signal (secondary synchronization signal, SSS) in the SSB.

In addition, in a multi-beam (beam) scenario of NR, the network device sends a synchronization signal/physical broadcast channel block set (SS burst set) to the terminal device in a beam-weeping (beam-sweeping) manner. For example, the network device periodically sends an SS burst set. The network device also sends a paging message to the terminal device in the beam-sweeping manner.

In other words, the network device repeatedly sends the SSB/paging message to the terminal device in a plurality of beams/beam directions. A beam/beam direction corresponding to the SSB is consistent with a beam/beam direction corresponding to the paging message. In addition, to ensure that the terminal device can monitor the paging message on a PDCCH monitoring occasion of a paging occasion PO, the beam/beam direction corresponding to the paging message corresponds to the PDCCH monitoring occasion of a paging occasion PO.

In conclusion, the beam/beam direction corresponding to the SSB corresponds to the PDCCH monitoring occasion of a paging occasion PO. An SS burst set includes a plurality of SSBs. The plurality of SSBs in the SS burst set have different SSB indexes. A paging occasion PO comprises a plurality of physical downlink control channel monitoring occasions (PDCCH monitoring occasions). To be specific, a k^{th} PDCCH monitoring occasion corresponds to a k^{th} actually sent SSB in the SS burst set, where k is greater than or equal to 1 and less than or equal to a total quantity of PDCCH monitoring occasions, and k is a positive integer. In addition, in the beam-sweeping manner, a quantity of beams or beam directions are usually fixed. Therefore, a beam and a beam direction of the beam corresponds to a same SSB.

Before monitoring a paging message, the terminal device may usually perform beam selection based on a reference signal (namely, an SSB), and then monitor the paging message on a PDCCH monitoring occasion corresponding to a selected beam/beam direction. If the terminal device does not select a proper beam/beam direction in advance, to ensure that the paging message is not missed, the terminal device may monitor the paging message on a plurality of PDCCH monitoring occasions corresponding to a plurality of beams/beam directions. In this way, AGC tuning, time-frequency synchronization, beam selection, and paging message monitoring on the plurality of PDCCH monitoring occasions cause high power consumption of the terminal device.

On the other hand, an objective of RRM measurement for mobility is to enable the terminal device in the RRC idle mode or the RRC inactive mode to perform cell selection/cell reselection (cell selection/cell reselection), and enable the terminal device in an RRC connected (RRC_CONNECTED) mode to perform cell handover, so that the terminal device can maintain good connection performance during movement.

Currently, a reference signal used for RRM measurement mainly includes two types: an SSB and a CSI-RS. The SSB is a cell-level signal. Therefore, the terminal device may use the SSB when the terminal device is in the RRC idle mode, the RRC inactive mode, or the RRC connected mode. The CSI-RS can be used by the terminal device only when the terminal device is in the RRC connected mode.

When the terminal device is in the RRC connected mode, the network device usually configures the CSI-RS for RRM measurement by using RRC signaling, and the SSB and/or the CSI-RS specifically used by the terminal device in the RRC connected mode are/is usually configured by using RRC signaling.

In addition, after the terminal device changes from the RRC idle mode or the RRC inactive mode to the RRC connected mode, the network device configures an additional reference signal based on a data transmission service requirement. For example, for the terminal device in the RRC connected mode, the network device may configure a tracking reference signal (tracking reference signal, TRS) used by the terminal device to perform time/frequency tracking, may configure a CSI-RS used by the terminal device to perform channel state information (channel state information, CSI) measurement, CSI reporting, beam measurement (for example, layer one-reference signal received power (layer one-reference signal receiving Power, L1-RSRP) measurement), L1-RSRP reporting, or the like, or may configure a CSI-RS for mobility (CSI-RS for mobility) used by the terminal device to perform RRM measurement and RRM measurement reporting (for example, reporting RSRP, reference signal received quality (reference signal receiving quality, RSRQ), or a signal to interference plus noise ratio (signal to interference plus noise ratio, SINR)), or the like.

When the terminal device is in the RRC idle mode or the RRC inactive mode, currently the terminal device can perform RRM measurement only based on the SSB. The terminal device performs AGC tuning, time-frequency synchronization, beam selection, and RRM measurement based on the SSB, and the SSB is periodically sent. There is a specific interval between occasions of the SSB, so that the SSB is sparse. Generally, in an NR system, a cycle of an SSB includes any one of 5 ms, 10 ms, 20 ms, 40 ms, 80 ms, or 160 ms.

In addition, when the terminal device performs RRM measurement based on the SSB, if the network device configures a synchronization signal/physical broadcast channel block measurement time configuration (SS/PBCH block measurement time configuration, SMTC) for the terminal device, the terminal device performs RRM measurement only within an SMTC window (SMTC window). If the network device does not configure an SMTC for the terminal device, the terminal device assumes that the cycle of the SSB is 5 ms.

Based on the foregoing content, the terminal device has high power consumption for performing paging message monitoring and RRM measurement due to the following reasons:
1. The paging occasion PO used by the terminal device to monitor the paging message is related to the identifier ID of the terminal device. The SSB is a cell-level broadcast signal, has a specific interval, and is sparse. Therefore, an occasion (or an SMTC window) of the SSB may not be aligned with the paging occasion PO used by the terminal device to monitor the paging message in the paging DRX cycle. In this case, to perform AGC tuning, time-frequency synchronization, beam selection, or the like based on the SSB in advance, the terminal device needs to wake up (wake-up) on the occasion of the SSB in advance. As a result, the terminal device in the RRC idle/inactive mode needs to wake up when monitoring the paging message on the paging occasion PO, and needs to wake up when performing AGC tuning, time-frequency synchronization, or beam selection based on the SSB on the occasion (or within the SMTC window) of the SSB. Thus, the terminal device needs to wake up twice or more times, or the terminal device maintains long wake-up duration between the foregoing two processes. This is not conducive to reducing power consumption of the terminal device.
2. Because the cycle of the SSB is long, if an interval between the occasion of the SSB and the paging occasion PO is long, on the paging occasion PO of the terminal device, a beam/beam direction (namely, a PDCCH monitoring occasion) selected by the terminal device based on the SSB may change greatly due to movement and rotation of the terminal device or another reason. Therefore, the terminal device still needs to scan and monitor the paging message based on a plurality of beams/beam directions (namely, a plurality of PDCCH monitoring occasions) of the paging occasion PO, to meet a measurement precision requirement. As a result, the terminal device needs to maintain a long wake-up time period. This is also not conducive to reducing power consumption of the terminal device.
3. The terminal device may need SSBs in a plurality of SS burst sets or SSBs within a plurality of SMTC windows to perform AGC tuning, time/frequency tracking, or RRM measurement, especially when a channel condition is poor or a length of an orthogonal frequency division multiplexing (orthogonal frequency division multiplexing, OFDM) symbol is short in a high frequency band (for example, an FR2 frequency band in a 5G network specified in a 3rd generation partnership project (3rd Generation Partnership Project, 3GPP) protocol, where a frequency range of the FR2 frequency band is 24.25 GHz to 52.6 GHz, which is usually referred to as a millimeter wave (mmWave)). When the channel condition is poor or the length of the OFDM symbol is short in the high frequency band (for example, the FR2 frequency band), because the SSB is sparse, one SSB may be insufficient to complete a preprocessing process (such as AGC tuning and time-frequency synchronization). As a result, the terminal device in the RRC idle mode or the RRC inactive mode monitors the paging message and performs RRM measurement for mobility within a plurality of SMTC windows of the SSB or by using a plurality of SS burst sets. In this case, the terminal device needs to maintain a wake-up state (or a light sleep state) within the plurality of SMTC windows or on occasions of the plurality of SS burst sets. As a result, a quantity of wake-up times increases or wake-up duration increases. This is also not conducive to reducing power consumption of the terminal device.

With reference to FIG. 2, the following describes, by using an example, a specific process of why a terminal device has high power consumption in the foregoing content.

As shown in FIG. 2, a cycle of an SSB is 20 ms, one of every two frames is a paging frame (Paging Frame, PF), and an occasion of the SSB is not aligned with a paging occasion PO. A paging occasion of the terminal device is a PO 1. To monitor a paging message on the PO 1, the terminal device needs to wake up on an occasion of the SSB before the PO 1. Therefore, the terminal device may perform AGC tuning, time/frequency tracking, beam selection, RRM measurement, or the like based on the SSB. When a channel condition is poor or a length of an OFDM symbol is short in a high frequency band (for example, the FR2 frequency band), AGC tuning may need a plurality of SSBs. As a result, the terminal device may not be able to complete RRM measurement one time for all SSBs in one SS burst set. Therefore, the terminal device may continue to perform RRM measurement based on the SSB in one SS burst set after the PO 1.

It can be learned that the terminal device needs to wake up for a plurality of times or maintain a long wake-up time period, resulting in high power consumption of the terminal device.

For the foregoing reasons, a terminal device in the RRC idle mode or the RRC active mode has high power consumption for performing paging message monitoring and RRM measurement based on the SSB. To resolve the foregoing problem, in a conventional feasible method, the network device configures more reference signals (reference signal) for the terminal device, to provide more occasions for the terminal device. This can reduce a wake-up time period of the terminal device, and reduce power consumption of the terminal device. Optionally, terminal devices in the RRC idle mode, the RRC inactive mode, and the RRC connected mode coexist in a cell. In addition, the network device configures a reference signal (for example, a TRS/CSI-RS) other than the SSB for a terminal device in the RRC connected mode. Therefore, if the reference signal configured for the terminal device in the RRC connected mode is configured for the terminal device in the RRC idle mode or the RRC inactive mode, the terminal device in the RRC idle mode or the RRC inactive mode may perform AGC tuning, time/frequency tracking, beam selection, or RRM measurement by using the reference signal, to reduce power consumption of the terminal device.

A person skilled in the art may understand that, in an NR system, to reduce consumption of an air interface resource and reduce power consumption of a network device, a design principle of the NR system is to minimize a sending frequency of an "always on (always on)" reference signal, and generally, only a small quantity of reference signals are sent. Currently, the SSB is a unique "always on" signal in the NR system, and a cycle in which the network device sends the SSB to a terminal device may be configured. The SSB is not necessarily sent in each frame. Because a reference signal configured for the terminal device in the RRC connected mode is an existing reference signal in a cell, the network device does not configure an additional reference signal specific for the terminal device in the RRC idle mode or the RRC inactive mode. This avoids adding an "always on" reference signal to the NR system.

However, the reference signal that is for the RRC connected mode and that is configured by the network device for the terminal device in the RRC idle mode or the RRC inactive mode may also be configured for a plurality of terminal devices in the RRC connected mode. In addition, generally, for different terminal devices in the RRC connected mode, the network device configures reference signals correspondingly. In other words, the network device configures reference signals specific (specific) for different terminal devices. In addition, when the reference signal is no longer needed (for example, the terminal device related to the reference signal is not in the RRC connected mode), the network device may release the reference signal, and no longer send the reference signal to the terminal device, thereby reducing power consumption of the network device. In addition, in a multi-beam system (for example, an FR2 frequency band), due to mobility of a terminal device (for example, a user moves, or a terminal device is blocked/turned over), different data services of different terminal devices, different connected-discontinuous reception (connected-discontinuous reception, C-DRX) cycles, different time points of different terminal devices to leave the connected mode, or the like, the network device sends reference signals in different beams/beam directions on different occasions, and stops sending a reference signal in a beam/beam direction in which the reference signal does not need to be sent. This can reduce power consumption of the network device.

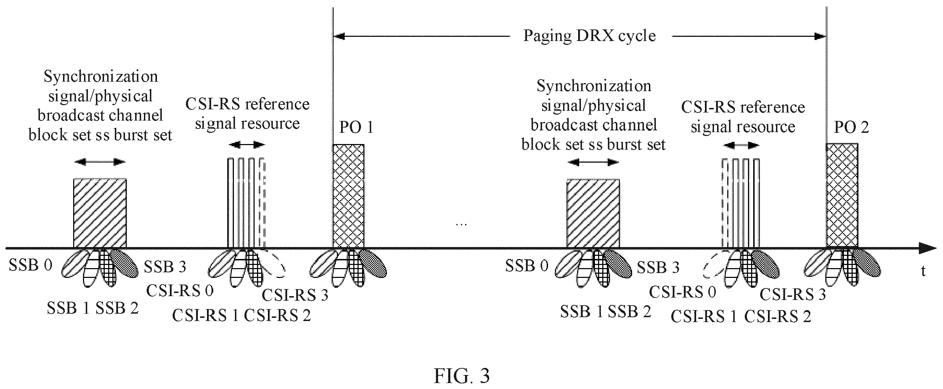

With reference to FIG. 3, the following describes, by using an example, a specific manner of sending the reference signal configured by the network device for the terminal device in the RRC connected mode in the foregoing content.

As shown in FIG. 3, an SS burst set includes four actually sent SSBs indexed an SSB 0, an SSB 1, an SSB 2, and an SSB 3 respectively. A paging occasion PO includes four PDCCH monitoring occasions (corresponding to four beams/beam directions), and each PDCCH monitoring occasion corresponds to one actually sent SSB. In FIG. 3, a CSI-RS is a reference signal configured by the network device for the terminal device in the RRC connected mode. A CSI-RS resource set includes four CSI-RSs indexed a CSI-RS 0, a CSI-RS 1, a CSI-RS 2, and a CSI-RS 3 respectively. Each of the four CSI-RSs has a quasi co-location (quasi co-location, QCL) relationship with one of the four SSBs.

In reference signals before a first paging occasion PO 1 in FIG. 3, a CSI-RS that has a QCL relationship with the SSB 3 is unavailable. The network device sends the reference signals CSI-RS 0, CSI-RS 1, and CSI-RS 2 to the terminal device, and stops sending the reference signal CSI-RS 3 to the terminal device.

In reference signals before a second paging occasion PO 2 in FIG. 3, a CSI-RS that has a QCL relationship with the SSB 0 is unavailable. The network device sends the reference signals CSI-RS 1, CSI-RS 2, and CSI-RS 3 to the terminal device, and stops sending the reference signal CSI-RS 0 to the terminal device.

It can be learned that availability of a reference signal configured for the RRC connected mode is not always available, and availability of reference signals in different beams/beam directions also changes.

It should be noted that, in FIG. 3, the first paging occasion PO 1 is located in a paging DRX cycle 1, the second paging occasion PO 2 is located in a paging DRX cycle 2, and the paging DRX cycle 1 and the paging DRX cycle 2 are adjacent paging DRX cycles, but are not a same paging DRX cycle. In addition, each paging DRX cycle may include a plurality of paging occasion POs, and in each paging occasion PO, one or more terminal devices monitors a paging PDCCH.

Therefore, fully considering the foregoing problem, this application provides a communication method, apparatus, and device. This can more precisely indicate availability of a reference signal in a beam/beam direction corresponding to at least one SSB, so that a terminal device can receive, from reference signals, a reference signal that is available in a beam/beam direction corresponding to the at least one SSB, and the terminal device performs AGC tuning, time/frequency tracking, beam selection, RRM measurement, or the like based on the reference signal that is available. This resolves a problem of power consumption caused by an unnecessary operation performed by the terminal device due to discontinuous reference signal sending and changeable availability of the reference signal in different beams/beam directions, reduces power consumption for performing paging message monitoring and RRM measurement, and thereby improves processing performance of the terminal device. Further, the reference signal may be an existing reference signal. This avoids adding an always on signal in the NR system, and meets a design principle of reducing always on signals in the NR system. For example, the reference signal may be a reference signal resource that has been configured for a terminal device in the RRC connected mode. The reference signal may also be a new reference signal, for example, a reference signal resource additionally configured for a terminal device in the RRC idle/inactive mode. In addition, because the terminal device may further learn of each paging occasion PO of the terminal device, the terminal device may receive, from reference signals, a reference signal that is available in the beam/beam direction corresponding to the at least one SSB and that is closest to a monitored paging message. This avoids unnecessary power consumption of the terminal device, and improves a processing capability of the terminal device.

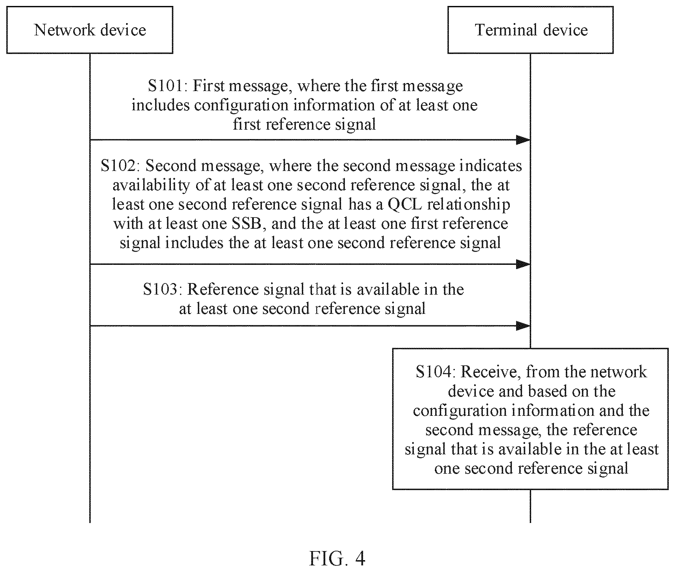

The following describes in detail a specific implementation process of the communication method in this application with reference to FIG. 4.

FIG. 4 is a signaling flowchart of a communication method according to an embodiment of this application. As shown in FIG. 4, the communication method in this application may include the following steps.

S101: A network device sends a first message to a terminal device, where the first message includes configuration information of at least one first reference signal.

In this application, the network device may configure one or more first reference signals for the terminal device. The at least one first reference signal may include at least one second reference signal, or may include the at least one second reference signal and at least one another reference signal. This is not limited in this application. The terminal device may implement at least one of AGC tuning, time-frequency synchronization, beam management, or RRM measurement based on the at least one second reference signal.

The at least one first reference signal may specifically include a reference signal that already exists for an RRC idle mode or an RRC inactive mode, or may include a reference signal that already exists for an RRC connected mode, or may include the signal in the foregoing two cases, or is not a reference signal that already exists in a system, but a reference signal additionally configured by the network device for the terminal device in the RRC idle mode or the RRC inactive mode. This is not limited in this application.

Optionally, to avoid violating a design principle of reducing always on signals in an NR system, the network device may use an existing reference signal in the NR system as the first reference signal configured for the terminal device. In this way, the terminal device obtains the configuration information of the first reference signal, thereby avoiding adding an always on signal.

A type of the at least one second reference signal is not limited in this application. Optionally, when the terminal device is in the RRC idle mode or the RRC inactive mode, a type of the second reference signal configured by the network device for the terminal device may include: at least one of a TRS, a CSI-RS, an SSB, or a secondary synchronization signal (Secondary Synchronization Signal, SSS).

A person skilled in the art may understand that the reference signal configured by the network device for the terminal device may have a plurality of functions. For example:
1. Time/frequency tracking: The TRS is a type of the CSI-RS, and is used by the terminal device to perform time/frequency tracking.
2. CSI calculation: For the RRC connected mode, the network device may configure the CSI-RS for channel quality measurement. For example, the terminal device may receive the CSI-RS, and then obtain, through measurement, a channel quality indicator (channel quality indicator, CQI), a precoding matrix indicator (Precoding matrix indicator, PMI), a rank indicator (rank indicator, RI), a CSI-RS resource indicator (CSI-RS Resource indicator, CRI), or a layer indicator (layer indicator, LI). Then, the terminal device reports an obtained measurement result to the network device.
3. Beam management: The CSI-RS may be used for beam management. For the reference signal used for beam management, the network device may configure whether the terminal device reports a measurement result in the RRC connected mode. The network device may configure the terminal device to report L1-RSRP. In this case, the terminal device may receive the reference signal and calculate the L1-RSRP. The network device may further configure a reporting quantity to NULL, to indicate that the terminal device does not need to report the beam measurement result.
4. RRM measurement: The CSI-RS may be used for RRM measurement for mobility. For example, the network device configures, for the terminal device in the RRC connected mode and by using a configuration information element CSI-RS-ResourceConfigMobility, a CSI-RS used for RRM measurement.

Based on the foregoing content, in the conventional technology, a reference signal configured for the terminal device in the RRC connected mode may have different functions. In this application, the second reference signal configured by the network device for the terminal device in the RRC idle mode or the RRC inactive mode may also have one or more functions. This is not limited in this application. Optionally, a function of the second reference signal may include: at least one of time/frequency tracking, beam management, radio resource management RRM measurement, automatic gain control AGC tuning, channel state information CSI calculation, or layer one-reference signal received power L1-RSRP calculation.

For example, a type of the second reference signal configured for the terminal device in the RRC idle mode or the RRC inactive mode may include but is not limited to a TRS used for time/frequency tracking or AGC tuning and a CSI-RS used for RRM measurement. In addition, although the terminal device does not need to report a CSI measurement result and an L1-RSRP measurement result when the terminal device is in the RRC idle mode or the RRC inactive mode, a reference signal used for CSI measurement/reporting and L1-RSRP measurement/reporting may also be used by the terminal device to perform another function, for example, AGC tuning, time/frequency tracking, or beam selection. In addition, although the terminal device does not report CSI/L1-RSRP in the RRC idle/inactive mode, the terminal device may buffer a calculated result such as CSI/L1-RSRP, and report the buffered result to the network device after entering the RRC connected mode. Alternatively, in an implementation, the network device can also configure the terminal device to report measured CSI/L1-RSRP in the RRC idle/inactive mode. This helps improve data transmission performance between the network device and the terminal device. Therefore, a type of the second reference signal configured for the terminal device in the RRC idle mode or the RRC inactive mode may further include a reference signal used for CSI/L1-RSRP calculation and/or reporting.

Because there are a plurality of types and/or functions of reference signals, and a plurality of function implementations are included in performing paging message monitoring and RRM measurement, there may be a plurality of configurations for the second reference signal configured by the network device for the terminal device. Therefore, in this application, the network device may obtain the configuration information of the second reference signal in a plurality of manners. A specific implementation of the configuration information of the second reference signal is not limited in this application.

Optionally, the terminal device may send request information to the network device. The request information is used to request the network device to configure a second reference signal that has a specific function or that is of a specific type for the terminal device. For example, the terminal device may send a non-access stratum (Non-Access Stratum, NAS) signaling bearer request information to the network device when the terminal device is in the RRC idle/inactive mode. For another example, before falling back from the RRC connected mode to the idle/inactive mode, the terminal device may send request information to the network device when the terminal device is in the RRC connected mode.

In this application, the network device may configure second reference signals that have different functions for the terminal device by using different information elements (information element, IE). For example, the network device configures, for the terminal device and by using a non-zero power (none zero power, NZP)-CSI-RS-ResourceSet IE, a second reference signal used for time/frequency tracking, or the network device configures, for the terminal device and by using a CSI-RS-ResourceConfigMobility IE, a second reference signal used for RRM measurement.

The following separately describes in detail specific implementation processes in which the network device configures, for the terminal device, a reference signal used for time/frequency tracking or beam management and a second reference signal used for RRM measurement. It may be understood that the network device generally configures, for the terminal device and by using different IEs, second reference signals used for time/frequency tracking or beam management and RRM measurement. However, according to different implementation capabilities of the terminal device, based on a second reference signal that has one function, the terminal device may implement another function in addition to the configured function of the second reference signal. For example, the terminal device may also perform AGC tuning, beam selection, or the like based on the second reference signal used for RRM measurement.

When the network device configures the second reference signal used for time/frequency tracking or beam management for the terminal device, a specific implementation of the configuration information of the second reference signal is described by using an example with reference to two feasible embodiments.

In a feasible embodiment, the network device may configure a plurality of second reference signals. In this case, the configuration information of the second reference signal may include configuration information elements of the plurality of second reference signals, and a configuration information element of each second reference signal may include but is not limited to: a number of the second reference signal, a time-frequency resource unit mapping manner of the second reference signal, power control offset of the second reference signal, a scrambling code number of the second reference signal, a time-domain period and period offset of the second reference signal, and a transmission configuration indication state (Transmission Configuration Indicator state, TCI state) of the second reference signal. To be specific, the transmission configuration indication state indicates a parameter such as a QCL source reference signal (QCL source reference signal) of the second reference signal and a QCL type between the second reference signal and the QCL source reference signal.

In another feasible embodiment, the network device may further configure a plurality of reference signal resource sets. Each reference signal resource set may be associated with one or more second reference signals. All second reference signals in each reference resource set have a same function and are of a same type, or all second reference signals in each reference resource set have a same function, or all second reference signals in each reference signal resource set are of a same type. This is not limited in this application.

In this case, the configuration information of the second reference signal may include: configuration information elements of the plurality of reference signal resource sets. A configuration information element of each reference signal resource set, namely, a configuration information element of a second reference signal in each reference signal resource set, may specifically include but is not limited to: a number of the reference signal resource set, a number of the second reference signal, and a function of the second reference signal (for example, a repetition (repetition) parameter indicates a beam management function, and a time/frequency tracking signal information (trs-Info) parameter indicates a time/frequency tracking function).

For example, if the trs-Info parameter is set to true, the configuration information element of the reference signal resource set may indicate that the second reference signal associated with the reference signal resource set is a TRS used for time/frequency tracking. If the repetition parameter is set to on, it indicates that all resources associated with the reference signal resource set are sent through a same downlink spatial domain transmission filter (downlink spatial domain transmission filter) in the network device, and all reference signals associated with the reference signal resource set are sent through a same quantity of ports. In this case, the configuration information element of the reference signal resource set may indicate that the second reference signal associated with the reference signal resource set is used for beam management, so that the terminal device performs beam selection. If a reference signal resource set does not include a trs-Info parameter and a repetition parameter, when the terminal device is in the RRC connected mode, a function of a configuration information element of the reference signal resource set is determined by a reporting configuration associated with the reference signal resource set. When the reporting configuration is a channel quality indicator (channel quality indicator, CQI), a precoding matrix indicator (Precoding matrix indicator, PMI), a rank indicator (rank indicator, RI), a CSI-RS resource indicator (CSI-RS Resource indicator, CRI), or a layer indicator (layer indicator, LI), the configuration information element of the reference signal resource set may indicate that the second reference signal associated with the reference signal resource set is used to calculate CSI. When the reporting quantity is set to L1-RSRP (L1-RSRP is a beam-level measurement result), the configuration information element of the reference signal resource set may indicate that the second reference signal associated with the reference signal resource set is used for beam management.

Because the terminal device does not need to report CSI in the RRC idle mode or the RRC inactive mode, the network device does not need to configure, for the terminal device in the RRC idle/inactive mode, configuration information about how to report CSI. However, in the conventional technology, when the terminal device is in the RRC connected mode, functions of some reference signals need to be determined based on parameters in reported configuration information associated with the reference signals. Therefore, in this application, the network device may add an additional parameter in the configuration information of the second reference signal to indicate a function of the second reference signal.

For example, in addition to the trs-Info parameter and the repetition parameter, one or more parameters are added to indicate a function. For example, a parameter (for example, L1-RSRP) is added to indicate a beam management/beam selection function. Alternatively, for another example, the terminal device determines the function of the second reference signal based on both the configuration information of the second reference signal and a protocol predefined rule. For example, the protocol predefines the function of the second reference signal when the trs-Info parameter and the repetition parameter are default.

In addition, in this application, the network device may configure one reference signal resource set to be associated with a second reference signal of one function, or may configure a plurality of reference signal resource sets to be associated with second reference signals that have a same function. Second reference signals that have any function may be reference signals of one or more types.

Based on the foregoing content, when the terminal device is in the RRC idle/inactive mode, a quantity of bits that can be carried by configuration instructions of the network device is limited. Therefore, to ensure that functions and types of second reference signals configured for the terminal device are complete, the network device may limit a quantity of second reference signals.

Optionally, based on a function and a type of a reference signal, the network device may configure a maximum quantity of second reference signals that have a same function and that are of a same type by using configuration information, may configure a maximum quantity of all second reference signals by using configuration information, may configure a maximum quantity of second reference signals that have a same function by using configuration information, may configure a maximum quantity of second reference signals of a same type by using configuration information, or may configure quantities of second reference signals by combining at least two of the foregoing manners. This can reduce configuration instructions of the network device.

In addition to the foregoing implementation, the quantity of second reference signals may be specified in a protocol rather than being configured by the network device using configuration information. Optionally, in all second reference signals, the maximum quantity of second reference signals that have a same function and that are of a same type is predefined, the maximum quantity of all second reference signals is predefined, the maximum quantity of second reference signals that have a same function is predefined, the maximum quantity of second reference signals that are of a same type is predefined, or maximum quantities of second reference signals in at least two of the foregoing manners are predefined. In this application, quantities of configured second reference signals do not need to be configured in the foregoing manners. This can reduce configuration instructions of the network device. In addition, a quantity of second reference signals may also be jointly determined by the network device and a protocol.

For ease of description, the following describes a specific implementation process of a maximum quantity Y of second reference signals by using an example in which a maximum quantity of second reference signals that have a same function is Y and Y is a positive integer.

For example, for a second reference signal that is of a specific type or that has a specific function, Y is equal to a maximum quantity A of SSB candidates (candidate) in an SS burst set within a frequency range of a current serving cell. For a carrier frequency f, for an FR1 frequency band, when f ≤ 3 GHz, Y = A = 4; when f > 3 GHz (that is, 3 GHz < f ≤ 6 GHz), Y = A = 8; and for an FR2 frequency band, when f > 6 GHz, Y = A = 64. Alternatively, Y is equal to a quantity of SSBs actually sent in an SS burst set by the current serving cell. The serving cell is a cell in which the terminal device camps when the terminal device is in the RRC idle mode or the RRC inactive mode.

For another example, for a second reference signal used for time/frequency tracking, Y is equal to B1 times the maximum quantity A of SSB candidates (candidate) in the SS burst set within the frequency range of the current serving cell, or Y is equal to B2 times the quantity of SSBs actually sent in the SS burst set by the current serving cell. B1 and B2 are positive integers. For example, B1 = 2 or 4, and B2 = 2 or 4.

When the network device configures the second reference signal for the terminal device by using the reference signal resource set, in this application, a quantity of second reference signals may be limited, or a quantity of reference signal resource sets to which the second reference signals belong (or associated) may be limited, or both a quantity of second reference signals and a quantity of reference signal resource sets to which the second reference signals belong may be limited.

For a process of limiting the quantity of second reference signals, refer to the foregoing content. Details are not described herein again. The following describes a specific implementation in which a quantity of reference signal resource sets to which the second reference signals belong is limited.

Optionally, the network device may configure, based on a function and a type of the second reference signal and by using configuration information, a maximum quantity of reference signal resource sets to which second reference signals that have a same function and that are of a same type belong. In addition to the foregoing implementations, the quantity of reference signal resource sets to which the second reference signals belong may be specified in a protocol rather than being configured by the network device using configuration information. Optionally, a maximum quantity of reference signal resource sets to which second reference signals that have a same function and a same type belong is predefined. This can reduce configuration instructions of the network device. In addition, the quantity of reference signal resource sets may also be jointly determined by the network device and a protocol.

For ease of description, the following describes a specific implementation process of a maximum quantity Z of reference signal resource sets that have different functions by using an example in which a maximum quantity of reference signal resource sets to which the second reference signals that have a same function belong is Z and Z is a positive integer.

For example, for a second reference signal not used for time/frequency tracking, the network device configures only one reference signal resource set for second reference signals that have a same function. In this case, Z = 1, to simplify configuration.

For another example, for second reference signals used for beam management, the network device configures only one reference signal resource set, so that one reference signal resource set can include all second reference signals that have a same function, thereby reducing configuration signaling overheads.

For still another example, for second reference signals used for time/frequency tracking, the network device configures or a protocol specifies that a value of Z is less than or equal to a quantity of SSBs actually sent in an SS burst set, or is less than or equal to a maximum quantity of SSB candidates (candidate) in an SS burst set within a frequency range in which the current serving cell is located, to reduce configuration instructions.

In conclusion, regardless of whether the quantity of second reference signals and/or reference signal resource sets is limited by using configuration information or a protocol, configuration signaling of the network device can be reduced. This helps improve a processing rate of the network device and reduce consumption of an air interface resource.

When the network device configures the second reference signal for the terminal device to perform RRM measurement, the network device may implement configuration in a plurality of manners. With reference to the following feasible embodiment, a specific implementation of the configuration information of the second reference signal is described by using an example.

In a feasible embodiment, the second reference signal used for RRM measurement is generally configured by using one or more information elements (Information Element, IE). For example, when the second reference signal is a CSI-RS, the information element is an information element CSI-RS-Resource-Mobility. In addition, different second reference signals in a same cell may be associated with a same reference signal resource set, that is, associated with a same information element. Different reference signal resource sets are distinguished by using cell IDs (cell ID/Physical cell ID). Second reference signals in different cells may be associated with a same configuration mobility information element (ConfigMobility IE). In addition, different second reference signals configured by using a same configuration mobile information element have a same subcarrier spacing, and different associated cells have a same SSB frequency.

It should be noted that, in addition to the foregoing manner, the network device may configure the second reference signal for the terminal device in another manner, to obtain the configuration information of the second reference signal. This application is not limited to the foregoing implementation.

In addition, if the at least one first reference signal further includes another reference signal, the network device may further implement configuration of the another reference signal. For a specific process, refer to an implementation process in the conventional technology. Details are not described herein. Therefore, the network device may obtain configuration information of at least one first reference signal.

In this application, after determining the configuration information of the at least one first reference signal, the network device may send the configuration information of the at least one first reference signal to the terminal device by using the first message. Therefore, the terminal device learns of a configuration including a type and a function of a second reference signal in the at least one first reference signal in a timely and accurate manner based on the configuration information of the at least one first reference signal.

The first message may be system information (System Information, SI), or may be a message other than SI, for example, a paging physical downlink shared channel (Physical Downlink Shared Channel, PDSCH) scheduled by a paging PDCCH. This is not limited in this application.

A person skilled in the art may understand that the SI may include a master information block (Master Information Block, MIB), a remaining minimum system information (remaining minimum system information, RMSI) (that is, a system information block type 1 (System Information Blocks Type 1, SIB 1)), and other system information (Other system information, OSI, namely, an SIB other than the SIB 1), for example, a SIB 2 to a SIB n, where n > 2, and n is a positive integer.

When the first message is SI, for ease of configuration, the network device may use a SIB 1 to carry the configuration information of the at least one first reference signal, or may use OSI to carry the configuration information of the at least one first reference signal, for example, one or more of an existing SIB 2 to an existing SIB 9, or a new system information block. Alternatively, the network device may carry the configuration information of the at least one first reference signal in both the SIB 1 and the OSI. This is not limited in this application.

In this application, the network device may send the configuration information of the at least one first reference signal to the terminal device in a broadcast manner, or may send the configuration information of the at least one first reference signal to the terminal device based on a request message sent by the terminal device. The request message is used to request the configuration information of the at least one first reference signal, the configuration information of the at least one second reference signal, or the first message. In addition, when the configuration information of the at least one first reference signal changes, or the configuration information of the at least one second reference signal changes, or other information in the first message changes, the network device may also send the configuration information of the at least one first reference signal or the first message including the configuration information of the at least one second reference signal to the terminal device. Alternatively, the network device periodically sends the first message to the terminal device based on a sending cycle of the first message, a sending cycle of the configuration information of the at least one first reference signal, or a sending cycle of the configuration information of the at least one second reference signal. A specific manner of sending the first message by the network device to the terminal device is not limited in this application.

S102: The network device sends a second message to the terminal device. The second message indicates availability of the at least one second reference signal, and the at least one second reference signal has a QCL relationship with at least one SSB.

A person skilled in the art may understand that, in a multi-beam/multi-beam direction scenario of NR, a network device sends a plurality of SS burst sets (for example, the SS burst sets are sent periodically) to a terminal device in a beam-sweeping manner, and each SS burst set includes a plurality of SSBs. In addition, the network device also sends a paging message to the terminal device in the beam-sweeping manner. In other words, beams/beam directions corresponding to the sent SSBs and the paging message are usually consistent, and one SSB or one paging message corresponds to a same beam/beam direction. In addition, the beam/beam direction corresponding to the paging message corresponds to a PDCCH monitoring occasion of a paging occasion PO. In other words, the beam/beam direction corresponding to the SSB corresponds to the PDCCH monitoring occasion of a paging occasion PO.

In an actual application process, availability of a reference signal may change, and the reference signal is not always available. In addition, on any occasion, availability of the reference signal in at least one beam/beam direction may also change. An example in which the reference signal is a CSI-RS configured for the terminal device in the RRC connected mode is used. The CSI-RS has advantages of a high frequency domain bandwidth and higher measurement precision than that of the SSB, and the CSI-RS is an existing resource configured by a cell for the terminal device in the RRC connected mode. However, a person skilled in the art may understand that the CSI-RS is not sent continuously. For example, if a connected-discontinuous reception (Connected-DRX, C-DRX) for the connected mode is configured for a terminal device in the RRC connected mode, and a C-DRX cycle is greater than 80 ms, the network device may send a CSI-RS used for RRM measurement to the terminal device only in an active time (Active time) in the C-DRX cycle, and may selectively send the CSI-RS to the terminal device or choose not to send the CSI-RS resource to the terminal device in a non-active time (Non-active time) in the C-DRX cycle. In this way, when the network device stops sending the CSI-RS to the terminal device, the terminal device in the RRC idle mode or the RRC inactive mode still performs RRM measurement at a corresponding time-frequency location. For example, reference signal received power (reference signal received power, RSRP) is measured. Consequently, a result of the RRM measurement is inaccurate. In this case, the terminal device performs an unnecessary measurement process, and causes unnecessary power consumption of the terminal device.

Based on the foregoing content, the network device may send the second message to the terminal device. The second message may indicate the availability of the at least one second reference signal, and the at least one second reference signal has a QCL relationship with the at least one SSB. Specifically, in this application, the network device may indicate, by using the second message, the availability of the at least one second reference signal that has a QCL relationship with the at least one SSB. In other words, the network device indicates the availability of the at least one second reference signal in a beam/beam direction corresponding to the at least one SSB. To be specific, by using the beam/beam direction corresponding to the SSB, the second message may indicate the availability of the at least one second reference signal at a granularity of a beam/beam direction. This helps more precisely indicate the availability of the at least one second reference signal in the at least one beam/beam direction, and avoids unnecessary power consumption caused by an unnecessary operation performed by the terminal device.

A specific implementation of the second message is not limited in this application. Optionally, in this application, at least one information bit (also referred to as a bit (bit)) in the second message indicates the availability of the at least one second reference signal. In addition, a specific manner of carrying the at least one information bit in the second message is not limited in this application.

Optionally, the at least one information bit in the second message may be carried in the SIB 1 or another SIB of the system information SI. The another SIB may be existing OSI or a new system information block, or may be carried in downlink control information (Downlink Control Information, DCI) carried on a PDCCH or information carried on a PDSCH. The DCI carried on a PDCCH or the information carried on a PDSCH may be information that already exists in the NR system, for example, paging DCI carried on a paging PDCCH or paging information carried on a PDSCH. Alternatively, the another SIB may be carried in information newly added to the NR system, for example, a PDCCH newly introduced for the RRC idle/inactive mode, and specifically, for example, a wake-up (Wakeup) PDCCH (for example, the PDCCH indicates whether there is paging information of the terminal device). This is not limited in this application.

Optionally, the second message is the SIB 1 or another SIB of the system information SI. The another SIB may be existing OSI, a new system information block, downlink control information (Downlink Control Information, DCI) carried on a PDCCH, or information carried on a PDSCH. The DCI carried on a PDCCH or the information carried on a PDSCH may be information that already exists in the NR system, for example, paging DCI carried on the paging PDCCH or paging information carried on the PDSCH. Alternatively, the another SIB may be carried in information newly added to the NR system, for example, a PDCCH newly introduced for the RRC idle/inactive mode, and specifically, for example, a wake-up (Wakeup) PDCCH (for example, the PDCCH indicates whether there is paging information of the terminal device). This is not limited in this application.

The availability of the at least one second reference signal may be available or unavailable.

Available indicates that the network device sends (or may send) a reference signal on a reference signal resource corresponding to the reference signal configured for the terminal device. The terminal device may assume that the network device sends the reference signal on the reference signal resource corresponding to the reference signal configured for the terminal device, and the terminal device may receive the reference signal.

Unavailable indicates that the network device does not send (or may not send) a reference signal on a reference signal resource corresponding to the reference signal configured for the terminal device. The terminal device cannot assume that the network device sends the reference signal on the reference signal resource corresponding to the reference signal configured for the terminal device.

S103: The network device sends, to the terminal device, a reference signal that is available in the at least one second reference signal.

In this application, the network device may determine availability of any second reference signal. It may be understood that, for any second reference signal indicated by the second message, if the network device indicates that the second reference signal is available, the network device sends the second reference signal. If the network device indicates that the second reference signal is unavailable, whether the network device still sends the second reference signal is not limited in this application.

In other words, in this application, the network device may send, to the terminal device, a reference signal that is available in the at least one second reference signal or may send, to the terminal device, a reference signal that is available in the at least one second reference signal and a reference signal that is unavailable in the at least one second reference signal. This is not limited in this application.

In addition, if the network device indicates availability of only some reference signals in the at least one configured second reference signal by using the second message, for remaining reference signals whose availability is not indicated, the availability of the remaining reference signals in the at least one second reference signal may be configured by the network device or predefined in a protocol.

S104: The terminal device receives, from the network device and based on the configuration information and the second message, the reference signal that is available in the at least one second reference signal.

In this application, the network device sends the at least one second reference signal to the terminal device on the reference signal resource corresponding to the reference signal configured for the terminal device. For example, when the at least one second reference signal includes an SSB, the network device may send, to the terminal device, at least one SSB that is available. The at least one SSB that is available is distributed in at least one beam/beam direction, so that the terminal device may receive the SSB in the at least one beam/beam direction. Alternatively, the at least one SSB that is available may be sent in a form of an SS burst set. To be specific, each SS burst set includes the at least one SSB that is available. For another example, when the at least one second reference signal includes a CSI-RS, the network device may send, to the terminal device, at least one CSI-RS (for example, the CSI-RS reference signal is sent periodically) that is available. The at least one CSI-RS reference signal that is available is distributed in at least one beam/beam direction, so that the terminal device may receive the CSI-RS in the at least one beam/beam direction. For still another example, when the at least one second reference signal includes an SSB and a CSI-RS, the network device may send the at least one SSB and the at least one CSI-RS reference signal to the terminal device in the foregoing two manners. Details are not described herein. Therefore, the terminal device may receive the SSB and the CSI-RS in at least one beam/beam direction.

Because the configuration information of the at least one first reference signal can indicate a configuration of the at least one second reference signal configured for the terminal device, in this application, the terminal device may determine, based on the configuration information of the at least one first reference signal, a configuration including a type and a function of the at least one second reference signal configured by the network device for the terminal device. In addition, the second message indicates the availability of the at least one second reference signal that has a QCL relationship with the at least one SSB. Therefore, in this application, the terminal device may determine, based on the second message, the availability of the at least one second reference signal in a beam/beam direction corresponding to the at least one SSB. Therefore, the terminal device may receive, from the network device and based on the configuration information and the second message, a reference signal that is available in the beam/beam direction corresponding to the at least one SSB in the at least one second reference signal, to perform AGC tuning, time/frequency tracking, RRM measurement, beam management, or the like based on the reference signal that is available, thereby avoiding unnecessary power consumption of the terminal device.

In addition, further, because the terminal device has learned of the availability of the at least one second reference signal in the beam/beam direction corresponding to the at least one SSB, and the terminal device may further learn of each paging occasion PO of the terminal device, the terminal device may receive, from the network device and on a reference signal resource corresponding to the reference signal configured for the terminal device, a reference signal that is available in the at least one second reference signal in the beam/beam direction corresponding to the at least one SSB and that is closest to the monitored paging message, to perform AGC tuning, time/frequency tracking, RRM measurement, beam management, or the like based on the reference signal that is available. This helps the terminal device properly select a reference signal, to avoid receiving a reference signal that is unavailable in the beam/beam direction corresponding to the at least one SSB, and enables the terminal device to receive the reference signal closest to the monitored paging message, to avoid unnecessary power consumption of the terminal device and improve a processing capability of the terminal device.

It should be noted that the reference signal closest to the monitored paging message may be understood as one or more second reference signals that are closest to the paging occasion PO before and/or after the paging occasion PO and that are in the at least one second reference signal that is available. Alternatively, it may be understood that if there is one or more second reference signals that are available and that are closer to the paging occasion PO than an existing SSB in the system, the terminal device only needs to receive a second reference signal closer to the paging occasion PO. This can avoid receiving a farther SSB, reduce a wake-up time period of the terminal device, and reduce power consumption. If no second reference signal that is closer to the paging occasion PO is available, the terminal device still needs to receive an SSB closer to the paging occasion PO.

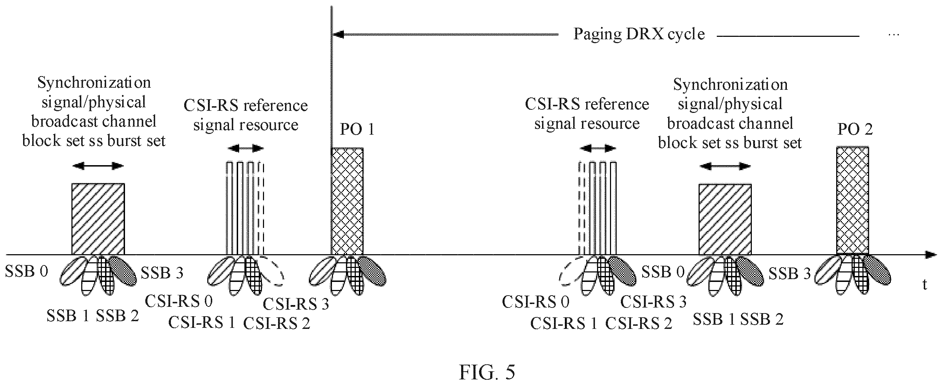

In a specific embodiment, an example in which the at least one second reference signal includes a CSI-RS is used. It is assumed that the network device separately sends an SS burst set and a CSI-RS reference signal resource set (for example, the SS burst set and the CSI-RS are periodically sent) to the terminal device on different occasions according to an embodiment shown in FIG. 5. An SSB is a reference signal broadcast in a cell. Each SS burst set includes four SSBs indexed an SSB 0, an SSB 1, an SSB 2, and an SSB 3 respectively. Each CSI-RS reference signal resource set includes four CSI-RSs indexed a CSI-RS 0, a CSI-RS 1, a CSI-RS 2, and a CSI-RS 3 respectively.

In this application, the terminal device may determine, based on the configuration information of the at least one first reference signal and the second message. that the at least one second reference signal before a first paging occasion PO 1 in FIG. 5 includes CSI-RSs, and the CSI-RS 0 that has a QCL relationship with the SSB 0 is available, the CSI-RS 1 that has a QCL relationship with the SSB 1 is available, and the CSI-RS 2 that has a QCL relationship with the SSB 2 is available, and the CSI-RS 3 that has a QCL relationship with the SSB 3 is unavailable.

Before the first paging occasion PO 1 in FIG. 5, the terminal device determines that the CSI-RSs in the CSI-RS reference signal resource set sent by the network device are closer to the first paging occasion PO 1 than the SSBs in the SS burst set sent by the network device. Therefore, the terminal device may receive the CSI-RS in the CSI-RS reference signal resource set instead of the SSB in the SS burst set. The terminal device may receive at least one of the CSI-RS 0, the CSI-RS 1, and the CSI-RS 2 in the CSI-RS reference signal resource set, but does not receive the CSI-RS 3, so that the terminal device may perform AGC tuning, time/frequency tracking, RRM measurement, beam management, or the like based on the at least one of the CSI-RS 0, the CSI-RS 1, and the CSI-RS 2.

Before a second paging occasion PO 2 in FIG. 5, the terminal device determines that the SSBs in the SS burst set sent by the network device is closer to the second paging occasion PO 2 than the CSI-RSs in the CSI-RS reference signal resource set sent by the network device. Therefore, the terminal device may receive the SSB in the SS burst set instead of the CSI-RS in the CSI-RS reference signal resource set. The terminal device may receive the SSB 0, the SSB 1, the SSB 2, and the SSB 3 in the SS burst set, so that the terminal device may perform AGC tuning, time/frequency tracking, RRM measurement, beam management, or the like based on at least one of the SSB 0, the SSB 1, the SSB 2, and the SSB 3.

It should be noted that, in FIG. 5, it may be considered that the first paging occasion PO 1 and the second paging occasion PO 2 belong to a same paging DRX cycle, the first paging occasion PO 1 and the second paging occasion PO 2 are adjacent paging occasion POs, and different terminal devices monitor a paging PDCCH on the first paging occasion PO 1 and the second paging occasion PO 2 respectively.

In this application, whether a reference signal is available is indicated at a granularity of a beam/beam direction corresponding to at least one SSB. In this case, availability of the reference signal can be indicated more precisely, so that the terminal device performs AGC tuning, time/frequency tracking, RRM measurement, beam management, or the like based on the reference signal that is available and that is indicated by the beam/beam direction corresponding to the at least one SSB, thereby reducing unnecessary power consumption of the terminal device. Further, the terminal device may use the reference signal configured for the terminal device in the RRC connected mode, thereby avoiding adding an always-on signal. Further, because the terminal device may further learn of each paging occasion PO of the terminal device, the terminal device may perform AGC tuning, time/frequency tracking, RRM measurement, beam management, or the like based on a reference signal that is closest to a monitored paging message and that is available in a beam/beam direction corresponding to the at least one SSB, thereby further reducing unnecessary power consumption of the terminal device. In addition, when the availability of the reference signal changes, the terminal device does not need to re-obtain configuration information of the reference signal, and can learn of the availability of the at least one configured second reference signal only based on the second message. This can reduce reference signal configuration signaling overheads for the RRC idle/inactive mode.

According to the communication method provided in this application, the network device sends the first message to the terminal device. The first message includes the configuration information of the at least one first reference signal, so that the terminal device can explicitly determine the at least one configured second reference signal based on the configuration information of the at least one first reference signal. The network device may send the second message to the terminal device. The second message indicates the availability of the at least one second reference signal, and the at least one second reference signal has a QCL relationship with the at least one SSB. The second message indicates, at a granularity of an SSB or a granularity of a beam/beam direction corresponding to an SSB, the availability of the at least one second reference signal that has a QCL relationship with the at least one SSB. In other words, the second message more precisely indicates availability of a reference signal in a beam/beam direction corresponding to the at least one SSB, so that the terminal device can determine availability of at least one second reference signal in the beam/beam direction corresponding to the at least one SSB. The network device sends, to the terminal device, a reference signal that is available in the at least one second reference signal. The terminal device may receive, from the network device and based on the availability of the at least one second reference signal in the beam/beam direction corresponding to the at least one SSB, the reference signal that is available in the at least one second reference signal. This helps the terminal device perform AGC tuning, time/frequency tracking, RRM measurement, beam management, or the like based on the reference signal that is available, resolves a problem of power consumption caused by an unnecessary operation performed by the terminal device due to discontinuous reference signal sending and changeable availability of the reference signal in different beams/beam directions, reduces power consumption for performing AGC tuning, time/frequency tracking, RRM measurement, beam management, or the like, and improves processing performance of the terminal device. In addition, when the availability of the reference signal changes, the terminal device does not need to re-obtain configuration information of the reference signal, thereby reducing configuration signaling overheads for the RRC idle/inactive mode.

Further, the at least one second reference signal configured by the network device for the terminal device may be an existing reference signal in an NR system, and an always on signal is not added. This avoids adding an always on signal in the NR system, and meets a design principle of reducing always on signals in the NR system.

Further, the terminal device may receive, from the network device and based on the availability of the at least one second reference signal in the beam/beam direction corresponding to the at least one SSB and each paging occasion for monitoring a paging message, a reference signal that is closest to the monitored paging message in second reference signals and that is available, thereby further reducing wake-up duration of the terminal device and reducing power consumption caused by an unnecessary operation performed by the terminal device.

Based on the foregoing descriptions, in a multi-beam/beam direction scenario (for example, an FR2 frequency band) of the NR system, when a terminal device is in the RRC idle mode or the RRC inactive mode, both an SSB and a paging message are sent in the beam sweeping manner. In other words, beams/beam directions corresponding to the sent SSB and the paging message are usually consistent, and an SSB or a paging message corresponds to a same beam/beam direction. In addition, the beam/beam direction corresponding to the paging message corresponds to a PDCCH monitoring occasion of a paging occasion PO. Therefore, the beam/beam direction corresponding to the SSB corresponds to the PDCCH monitoring occasion of a paging occasion PO.

In addition, in an existing protocol, the terminal device may assume that a demodulation reference signal (demodulation reference signal, DM-RS) of a paging PDCCH and a demodulation reference signal of a paging PDSCH have a QCL relationship with an associated SSB, and are quasi co-located with the associated SSB for the following parameters: a delay spread (delay spread), a Doppler spread (doppler spread), a Doppler shift (doppler shift), an average gain (average gain), an average delay (average delay), or a spatial receive parameter (spatial Rx parameter).

Therefore, in the RRC idle mode or the RRC inactive mode, if the terminal device wants to perform operations such as AGC tuning, time/frequency tracking, beam selection, or RRM measurement by using a reference signal (or a reference signal resource) configured by the network device, the reference signal (or the reference signal resource) should have a QCL relationship with the SSB.

In this application, in addition to a basic configuration of the at least one second reference signal in the configuration information, the network device may further configure the QCL relationship between the at least one second reference signal and the SSB in the configuration information, so that the terminal device can determine, based on the configuration information, the at least one second reference signal that has a QCL relationship with the at least one SSB. Then, the terminal device may determine, by using the foregoing description of the beam/beam direction corresponding to the SSB and based on the second message, the availability of the at least one second reference signal in the beam/beam direction corresponding to the at least one SSB.

A person skilled in the art may understand that, in the NR system, a quasi co-location (quasi co-location, QCL) relationship may be configured between different reference signals, between different reference signal resources, or between different antenna ports (antenna port). If there is a QCL relationship between two antenna ports, it indicates that a large-scale fading parameter of a channel corresponding to an antenna port can be inferred from a large-scale fading parameter of a channel calculated based on another port. The large-scale fading parameter of a channel includes at least one of the following parameters: a delay spread (delay spread), a Doppler spread (doppler spread), a Doppler shift (doppler shift), an average gain (average gain), an average delay (average delay), or a spatial receive parameter (spatial Rx parameter).

In addition, the QCL relationship may be generally configured by using a TCI state. The TCI state may be associated with one or two reference signals that are other than the reference signal and that are used as QCL source reference signals, and a QCL type between a current reference signal antenna port and the source reference signal is configured. Currently, the NR protocol supports configuration of four QCL types: a QCL-Type A, a QCL-Type B, a QCL-Type C and a QCL-Type D.

It should be noted that, there is a QCL relationship between two reference signals (or reference signal resources) mentioned in this application. In other words, two reference signals (or reference signal resources) mentioned in this application are quasi co-located. It may indicate that the QCL relationship between the two reference signals (or reference signal resources) is one or more of the QCL-Type A, the QCL-Type B, the QCL-Type C, or the QCL-Type D.

Optionally, the QCL relationship mentioned in this application may also be a QCL relationship in a broader meaning. For example, that there is a QCL relationship between two reference signals does not necessarily mean that the QCL relationship between two reference signals is of one or more QCL types in the QCL-Type A, the QCL-Type B, the QCL-Type C, or the QCL-Type D. For example, a reference signal 1 has a QCL-Type D relationship with a reference signal 2, and the reference signal 2 has a QCL-Type D relationship with a reference signal 3. However, the reference signal 1 does not have a QCL-Type A, QCL-Type B, QCL-Type C, or QCL-Type D relationship with the reference signal 3, but the reference signal 1 may be considered to have a QCL relationship with the reference signal 3.

The terminal device may determine the QCL relationship between the at least one second reference signal and the SSB in a plurality of manners. Optionally, the configuration information sent by the network device may include second information. The second information may configure the QCL relationship between the at least one second reference signal and the SSB by configuring a TCI status of the at least one second reference signal. For example, the QCL relationship is indicated by using a QCL source reference signal (source reference signal), or may be indicated by using another parameter in the configuration information. This is not limited in this application.

The second information is used to determine the QCL relationship between the at least one second reference signal and the at least one SSB, or the second information is used to determine a QCL relationship between the at least one second reference signal and at least one reference signal other than the at least one SSB. The at least one reference signal other than the at least one SSB has a QCL relationship with the at least one SSB. Alternatively, the second information is used to determine the QCL relationship between the at least one second reference signal and the at least one SSB, and is used to determine a QCL relationship between the at least one second reference signal and at least one reference signal other than the at least one SSB. The at least one reference signal other than the at least one SSB has a QCL relationship with the at least one SSB.

In other words, the second information may be used to determine that there is a QCL relationship between two reference signals. The two reference signals refer to the at least one second reference signal and the SSB. The second information may be used to directly determine the QCL relationship between the at least one second reference signal and the SSB, or may be used to separately determine, by using a reference signal other than the SSB, that the at least one second reference signal has a QCL relationship with the reference signal other than the SSB, and that the reference signal other than the SSB has a QCL relationship with the SSB, to indirectly determine the QCL relationship between the at least one second reference signal and the SSB. Alternatively, the second information may be used to determine the QCL relationship between the at least one second reference signal and the SSB by using a combination of the foregoing two manners. A specific implementation form of the second information is not limited in this application.

For example, when the terminal device is in the RRC idle mode or the RRC inactive mode, the network device may configure a QCL source reference signal of the at least one second reference signal as an SSB. When the at least one second reference signal is associated with only one QCL source reference signal, the QCL source reference signal is an SSB. When the at least one second reference signal is associated with two QCL source reference signals, at least one QCL source reference signal is an SSB.

For another example, if the at least one second reference signal includes a reference signal 2, a QCL source reference signal of the reference signal 2 does not include an SSB. Instead, a QCL source reference signal associated with a reference signal 1 is an SSB, the reference signal 2 has a QCL relationship of a QCL type with the reference signal 1, and the reference signal 1 has a QCL relationship of a QCL type with the SSB. In other words, a QCL relationship may be determined between the reference signal 2 and the SSB that has a QCL relationship of a QCL type with the reference signal 1. In addition, in the RRC idle mode or the RRC inactive mode, if the terminal device has received the configuration information, the terminal device can receive the reference signal 2 only when the terminal device determines that the reference signal 1 is available or detects (for example, the terminal device determines that a parameter such as signal strength, an SNR, or RSRP of the reference signal 1 is greater than a specific threshold) the reference signal 1 on a reference signal resource of the reference signal 1. Otherwise, the terminal device is usually not required to receive the reference signal 2, and the terminal device does not receive the reference signal 2.

In addition, for the at least one second reference signal used for RRM measurement, for example, a reference signal (or a reference signal resource) configured by using CSI-RS-Resource-Mobility signaling, the network device may configure the at least one second reference signal (or reference signal resource) to be associated with an SSB, and configure whether the CSI-RS has a QCL-Type D relationship with the associated SSB.

With reference to three feasible implementations, the following describes a specific implementation process of the QCL relationship between the SSB and the at least one second reference signal used for RRM measurement.

In a feasible implementation, for the at least one second reference signal that is configured by the network device for the terminal device in the RRC idle mode or the RRC inactive mode and that is used for RRM measurement, the associated SSB is configured for all reference signals in a same cell, or no associated SSB is configured for all reference signals in a same cell.

When no associated SSB is configured for all second reference signals in a same cell (referred to as a first cell), in a manner 1, the network device may optionally configure a cell number (referred to as a second cell). When the network device does not configure a number for the second cell, the protocol specifies a default number of the second cell. For example, the second cell is the first cell by default or the serving cell on which the terminal device currently camps. In a manner 2, there is no parameter for configuring a number for the second cell, and the second cell described below is the first cell. In this case, a quantity of all second reference signals configured in the first cell is equal to a quantity of SSBs actually sent in an SS burst set in the second cell. In addition, all the second reference signals configured in the first cell in ascending order (or descending order) of the numbers of the second reference signals are in a one-to-one correspondence with the SSBs actually sent in the SS burst set in the second cell in ascending order (or descending order) of SSB indexes. In other words, there is a QCL relationship.

A specific type of the QCL relationship may be at least one of a type A, a type B, a type C, or a type D. For example, the QCL relationship is the type D. In addition, the first cell and the second cell may be a same cell (with a same physical layer cell number), or may be different cells. This is not limited in this application.

When an associated SSB is configured for all second reference signals in a same cell (referred to as a first cell), the network device further configures a number for a cell in which the associated SSB is located. Optionally, the associated SSB is an SSB that is located in the first cell and that is actually sent in an SS burst set. In other words, a cell in which the associated SSB is located is also the first cell.

In addition, because second reference signals in one reference signal resource are of a same type, the second information may also be described as being used to determine that there is a QCL relationship between two reference signal resources. For a specific implementation process, refer to the foregoing content. Details are not described herein again.

It should be noted that, in this application, the second information may be configured by the network device, may be defined in a protocol, or may be pre-stored in the terminal device. This is not limited in this application. When the second information is defined in a protocol or pre-stored in the terminal device, the terminal device may directly determine the second information. When the second information is configured by the network device, the terminal device may receive the second information from the network device.

Therefore, the terminal device may determine, based on the second information, whether the at least one second reference signal has a QCL relationship with the SSB, to determine, by using the correspondence between the SSB and the beam/beam direction described in the foregoing content, the availability of the at least one second reference signal in the beam/beam direction corresponding to the at least one SSB.

Based on the foregoing descriptions, before receiving, from the network device and based on the configuration information and the second message, the reference signal that is available in the at least one second reference signal in S104, the terminal device needs to learn of a correspondence between the second message and the at least one second reference signal. Optionally, the network device may send first information to the terminal device. The first information is used to determine a correspondence between at least one information bit in the second message and the at least one SSB, or the first information is used to determine a correspondence between at least one information bit in the second message and an SSB index (index) corresponding to the at least one SSB. The network device may configure, by using a "bridge" function of the SSB and based on the correspondence between the information bit in the second message and the SSB/SSB index (index) and the QCL relationship between the SSB and the at least one second reference signal, a correspondence between the at least one information bit in the second message and the at least one second reference signal. Therefore, the network device indicates the availability of the at least one second reference signal by using the at least one information bit in the second message, and the terminal device determines the correspondence between the at least one information bit in the second message and the at least one second reference signal based on the first information, and further determines the availability of the at least one second reference signal corresponding to the at least one information bit based on the second message.

The first information may be configured in the configuration information of the at least one first reference signal in the first message, may be configured in information other than the configuration information of the at least one first reference signal in the first message, or may be configured in another message other than the first message. This is not limited in this application. A specific implementation of the first information is not limited in this application.

For example, the first information may be used to determine an SSB or an SSB index (index) corresponding to each information bit, and a design is simple. Alternatively, the first information may be used to determine a plurality of SSBs or a plurality of SSB indexes (index) corresponding to each information bit, to reduce signaling overheads of the second message and configure a correspondence between at least one information bit in the second message and the at least one SSB.

In addition, a specific implementation of the information bit determined based on the first information, a specific implementation of the SSB, and a specific implementation of the SSB index corresponding to the SSB are not limited in this application. For the SSB index mentioned in this application, refer to the following content. Details are not described herein again.

It should be noted that, in this application, the first information may be configured by the network device, may be defined in a protocol, or may be pre-stored in the terminal device. This is not limited in this application. When the first information is defined in a protocol or pre-stored in the terminal device, the terminal device may directly determine the first information. When the first information is configured by the network device, the terminal device may receive the first information from the network device.

Therefore, the terminal device may determine a correspondence between the at least one information bit in the second message and the at least one second reference signal based on the first information and the QCL relationship between the SSB and the at least one second reference signal, so that the terminal device determines the availability of the at least one second reference signal in a beam/beam direction corresponding to the at least one SSB.

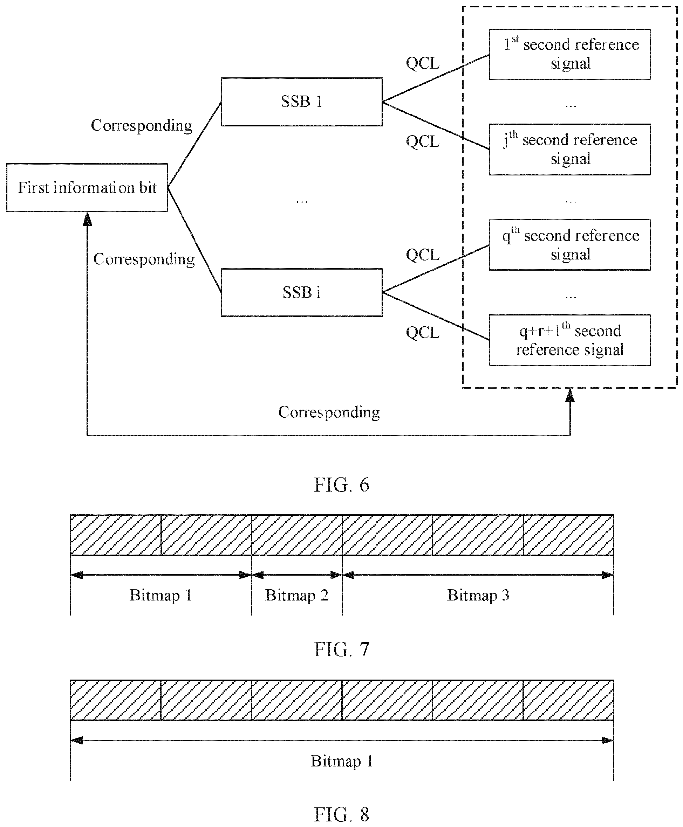

As shown in FIG. 6, the first information is used to determine that a first information bit in the second message corresponds to i actually sent SSBs. There are totally q+r+1 second reference signals that have QCL relationships with the i actually sent SSBs (namely, SSB 1 to SSB i). In this case, the first information bit corresponds to the q+r+1 second reference signals that have QCL relationships with the i actually sent SSBs, so that the first information bit may indicate availability of the q+r+1 second reference signals.

In this case, i and j are positive integers, q and r are natural numbers, and a quantity of bits of the first information bit is greater than or equal to 1.

In addition, in this application, the network device may further send third information to the terminal device. The third information is used to configure a correspondence between the at least one information bit in the second message and the at least one second reference signal. Therefore, the terminal device can determine the correspondence between the at least one information bit in the second message and the at least one second reference signal based on the third information without using the "bridge" function of the SSB. In this case, the network device indicates the availability of the at least one second reference signal based on the at least one information bit in the second message, and the terminal device determines the availability of the at least one second reference signal based on the third information.

It should be noted that, in this application, the third information may be configured by the network device, may be defined in a protocol, or may be pre-stored in the terminal device. This is not limited in this application. When the third information is defined in a protocol or pre-stored in the terminal device, the terminal device may directly determine the third information. When the third information is configured by the network device, the terminal device may receive the third information from the network device.

Therefore, the terminal device may determine the correspondence between the at least one information bit in the second message and the at least one second reference signal based on the third information, so that the terminal device determines the availability of the at least one second reference signal.

Based on the foregoing descriptions, due to various subjective and objective factors, the terminal device may not receive the information bit that indicates the availability of the at least one second reference signal that has a QCL relationship with the at least one SSB. For example. the network device does not send the second message to the terminal device, the network device sends the second message to the terminal device but the terminal device has not received the second message, the network device sends the second message to the terminal device but the terminal device receives the second message incorrectly and has not received the second message, or the network device sends the second message to the terminal device but the second message received by the terminal device does not include the information bit that indicates the availability of the at least one second reference signal that has a QCL relationship with the at least one SSB. This manner is not limited in this application.

For example, the second message may be paging DCI carried on a PDCCH, and the terminal device detects the paging DCI carried on the PDCCH. The paging DCI is DCI scrambled with a paging-radio network temporary identifier (Paging-Radio Network Temporary Identity, P-RNTI) of the terminal device, and indicates a resource location of a paging message sent by the network device to the terminal device. The information bit that indicates the availability of the at least one second reference signal that has a QCL relationship with the at least one SSB is not received in the paging DCI. In other words, the paging DCI does not include the information bit that indicates the availability of the at least one second reference signal that has a QCL relationship with the at least one SSB. Alternatively, the terminal device has not detected the paging DCI when a cyclic redundancy check (cyclic redundancy check, CRC) of the paging PDCCH fails.

To avoid the foregoing case, the network device may send a third message to the terminal device. The third message is used to configure default availability of the at least one second reference signal. The network device may configure the default availability of the at least one second reference signal according to an actual situation. For example, the default availability may be that all second reference signals in beams/beam directions are unavailable, that all second reference signals in beams/beam directions are available, that all second reference signals in at least one beam/beam direction is unavailable, that all second reference signals in at least one beam/beam direction are available, that at least one second reference signal in all second reference signals may be unavailable, or that at least one second reference signal in all second reference signals may be available. This is not limited in this application.

In an implementation, the third message includes configuration information of the default availability of second reference signals that have different functions or that are of different types.

It should be noted that, in this application, the third message may be configured by the network device, may be defined in a protocol, or may be pre-stored in the terminal device. This is not limited in this application. When the third message is defined in a protocol or pre-stored in the terminal device, the terminal device may directly determine the third message. When the third message is configured by the network device, the terminal device may receive the third message from the network device.

Therefore, the network device may configure the default availability of the at least one second reference signal based on the third message, so that when the terminal device does not receive the information bit that indicates the availability of the at least one second reference signal that has a QCL relationship with the at least one SSB, the terminal device can determine the availability of the at least one second reference signal based on the third message. In addition, in this application, the default availability of the at least one second reference signal may alternatively be configured by using the first message, instead of the third message. This is not limited in this application.

In addition, when the information bit that indicates the availability of the at least one second reference signal that has a QCL relationship with the at least one SSB is not received, the terminal device may determine the availability of the at least one second reference signal in a plurality of other manners.

Optionally, the terminal device may determine the availability of the at least one second reference signal based on an information bit that is in a second message received last time and that indicates the availability of the at least one second reference signal that has a QCL relationship with the at least one SSB. The second message received last time is a second message that is successfully received by the terminal device from the network device before an occasion on which the terminal device receives the second message this time and that is closest to the occasion on which the terminal device receives the second message this time. On the occasion on which the terminal device receives the second message this time, the terminal device has not received the information bit that indicates the availability of the at least one second reference signal that has a QCL relationship with the at least one SSB.

Optionally, the terminal device may determine that the at least one second reference signal is unavailable.

Optionally, the terminal device may determine that the at least one second reference signal is available.

Optionally, the terminal device may determine that at least one reference signal in the at least one second reference signal is available.

In conclusion, the terminal device may determine the availability of the at least one second reference signal according to an actual situation and the foregoing manner. A specific manner to be used may be determined based on a configuration by the network device or may be predefined in a protocol. It should be noted that this application is not limited to the foregoing implementations.

Based on the foregoing descriptions, the second reference signal may include a plurality of types and/or functions. Different second reference signals may have QCL relationships with different SSBs (or SSB indexes). Therefore, in this application, at least one information bit in the second message may be indicated in a bitmap form. A quantity of bitmaps in the second message is n, n is greater than or equal to 1 and less than N, and n and N are positive integers. The bitmap indicates availability of a reference signal that has a QCL relationship with at least one SSB.

The quantity N may be configured by the network device, may be defined in a protocol, may be implicitly determined based on a function/type of the second reference signal and a correspondence between the at least one information bit in the second message and the at least one second reference signal, or may be pre-stored in the terminal device. This is not limited in this application. The quantity n may also be configured by the network device, may be defined in a protocol, may be pre-stored in the terminal device, or may be implicitly determined based on a function/type of the reference signal and a correspondence between the at least one information bit in the second message and the at least one second reference signal. This is also not limited in this application.

When the second message is paging DCI carried on a PDCCH, a first bitmap in the second message may be the same on each PDCCH monitoring occasion of any paging occasion PO. Therefore, a design is simple and convenient. The terminal device only needs to obtain the first bitmap on at least one PDCCH monitoring occasion of a paging occasion PO, to fully determine, by using the first bitmap obtained on any PDCCH monitoring occasion, the availability of the at least one second reference signal that has a QCL relationship with at least one SSB. Alternatively, the first bitmap in the second message may be different on each PDCCH monitoring occasion of any paging occasion PO. For example, quantities of SSBs and/or indexes of SSBs corresponding to first bitmaps on different PDCCH monitoring occasions of any paging occasion PO are different, so that different first bitmaps indicate availability of reference signals that have QCL relationships with different SSBs, and the first bitmap does not need to correspond to all SSB indexes. This can reduce a quantity of bits in the first bitmap, and can reduce instruction signaling overheads. The first bitmap described herein may be different on each PDCCH monitoring occasion of any paging occasion PO. To be specific, first bitmaps may have a same quantity of bits, but different first bitmaps correspond to different reference signals. Alternatively, different first bitmaps correspond to different reference signals, and different first bitmaps also have different quantities of bits.

For example, in a cell, four SSBs are sent in an SS burst set indexed an SSB 0, an SSB 1, an SSB 2, and an SSB 3 respectively. The network device configures four CSI-RSs as second reference signals indexed a CSI-RS 0, a CSI-RS 1, a CSI-RS 2, and a CSI-RS 3 respectively. The CSI-RS 0 has a QCL relationship with the SSB 0, the CSI-RS 1 has a QCL relationship with the SSB 1, the CSI-RS 2 has a QCL relationship with the SSB 2, and the CSI-RS 3 has a QCL relationship with the SSB 3. The first bitmap includes four bits. The four bits respectively correspond to the four SSBs, and further respectively correspond to the four CSI-RSs that have QCL relationships with the four SSBs. A first bitmap sent by the network device on each PDCCH monitoring occasion of any paging occasion PO includes four bits, and have same correspondences with the four CSI-RSs respectively.

In the foregoing second manner, the first bitmap includes three bits. A first bitmap sent by the network device on each PDCCH monitoring occasion of any paging occasion PO includes three bits. The three bits included in the first bitmap sent on a first PDCCH monitoring occasion respectively correspond to the SSB 3, the SSB 0, and the SSB 1, and respectively correspond to the three CSI-RSs that have QCL relationships with the three SSBs. The three bits included in the first bitmap sent on a second PDCCH monitoring occasion respectively correspond to the SSB 0, the SSB 1, and the SSB 2, and respectively correspond to the three CSI-RSs that have QCL relationships with the three SSBs. The three bits included in the first bitmap sent on a third PDCCH monitoring occasion respectively correspond to the SSB 1, the SSB 2, and the SSB 3, and respectively correspond to the three CSI-RSs that have QCL relationships with the three SSBs. The three bits included in the first bitmap sent on a fourth PDCCH monitoring occasion respectively correspond to the SSB 2, the SSB 3, and the SSB 0, and respectively correspond to the three CSI-RSs that have QCL relationships with the three SSBs.

In conclusion, it can be learned that the foregoing second manner can reduce bit overheads.

It should be noted that, in this application, whether the first bitmap in the second message is the same on each PDCCH monitoring occasion of any paging occasion PO may be configured with reference to an actual situation. This is not limited herein.

When the second message is paging DCI carried on a PDCCH, a quantity of bits in the first bitmap in the second message may be the same on different paging occasions POs, so that a correspondence between the first bitmap and the at least one second reference signal is the same. Therefore, a design is simple. The first bitmap may be one or more bitmaps, and the first bitmap may include one or more information bits. This is not limited in this application.

It should be noted that, in this application, whether quantities of bits in first bitmaps in second messages on different paging occasions POs are the same may be configured with reference to an actual situation. This is not limited herein.

Based on the foregoing descriptions, the second message may have a plurality of implementations. Optionally, the second message may include the first bitmap and a second bitmap. An information bit in the first bitmap corresponds to a first function of the at least one second reference signal, and an information bit in the second bitmap corresponds to a second function of the at least one second reference signal.

The first bitmap may be one or more bitmaps, and the second bitmap may be one or more bitmaps. The information bit in the first bitmap corresponds to a first type of the at least one second reference signal, and the information bit in the second bitmap corresponds to a second type of the at least one second reference signal. The first type and the second type may be any type of the second reference signal. For specific content, refer to the foregoing description. Details are not described herein again. In addition, the first type and the second type may be the same, or may be different. This is not limited in this application.

In addition, the first function may include one or more functions, and the second function may include one or more functions. All or some of functions in the first function and the second function may be the same. The foregoing content is not limited in this application.

Based on the foregoing description, any bitmap includes one or more information bits. The following describes a correspondence between a function of the at least one second reference signal and a bitmap with reference to several feasible implementations.

In a feasible implementation, at least one second reference signal that has a same function is mapped (that is, corresponds) to a same bitmap, and at least one second reference signal that has different functions is mapped to different bitmaps. In this case, one information bit corresponds to only at least one second reference signal that has one function.

As shown in FIG. 7, the second message includes a bitmap 1, a bitmap 2, and a bitmap 3. The bitmap 1 includes K1 bits, and the bitmap 1 corresponds to at least one second reference signal TRS used for time/frequency tracking. The bitmap 2 includes K2 bits, and the bitmap 2 corresponds to at least one second reference signal used for beam management (for example, used by the terminal device to calculate L1-RSRP). The bitmap 3 includes K3 bits, and the bitmap 3 corresponds to at least one second reference signal CSI-RS used for RRM measurement.

K1, K2, and K3 are respectively greater than or equal to 0. When the network device does not configure at least one second reference signal corresponding to a bitmap, a quantity of bits in the bitmap is 0. For ease of description, in FIG. 7, K1 = 2, K2 = 1, K3 = 3, and one grid indicates one information bit.

Optionally, quantities of bits in different bitmaps corresponding to different reference signal functions are different. In this way, a mapping relationship between each bitmap and an SSB is different. If the network device configures a mapping relationship (namely, first information) between a bitmap and an SSB, the network device needs to separately configure a correspondence between each bitmap and an SSB.

Optionally, quantities of bits in different bitmaps corresponding to different reference signal functions are the same. For example, in the preceding example, K1 = K2 = K3. A mapping relationship between each bitmap and an SSB is the same. Therefore, the network device can configure mapping relationships between all bitmaps and SSBs by configuring only a mapping relationship between any bitmap and an SSB, and does not need to separately configure a correspondence between each bitmap and an SSB, thereby reducing configuration signaling overheads.

A function of the reference signal is a function of the second reference signal. For specific content, refer to the foregoing description. Details are not described herein again.

Optionally, a network device configures or a protocol specifies that, regardless of a single beam/beam direction scenario or a multi-beam/beam direction scenario, one bit indicates availability of at least one second reference signal that has one reference signal function. For example, in the preceding example, K1 = K2 = K3 = 1.

In another feasible implementation, at least one second reference signal that has different reference signal functions is mapped to a same bitmap. In this case, one information bit simultaneously corresponds to one or more second reference signals that have different reference signal functions.

As shown in FIG. 8, the second message includes a bitmap 1, the bitmap 1 includes K information bits, and each information bit in the bitmap 1 corresponds to a second reference signal that has one or more reference signal functions. K is greater than or equal to 0. For ease of description, in FIG. 8, K = 6, and one grid indicates one information bit. In other words, any bit in the bitmap 1 corresponds to a second reference signal that has any reference signal function and that has a QCL relationship with an SSB corresponding to the bit.

In addition, the second message may alternatively include a third bitmap, a fourth bitmap, and the like. A quantity of bitmaps in the second message is not limited in this application.

In another feasible implementation, for a second reference signal that has any function, a quantity of second reference signals (or second reference signal resources) configured by the network device is greater than or equal to a quantity of SSBs actually sent in an SS burst set.

For example, it is assumed that a quantity of SSBs actually sent in an SS burst set is S. For at least one second reference signal that has a same function, a quantity of second reference signals configured by the network device is N. For the SSB index (index) k (1 ≤ k ≤ S) (the SSB is referred to as a k^{th} actually sent SSB), the network device configures that the at least one second reference signal is quasi co-located with the SSB index k. Therefore, N ≥ S. It is considered that the network device establishes a correspondence between the second message and the at least one second reference signal by using a "bridge" function of the SSB. Therefore, a quantity of SSBs actually sent in one SS burst set may affect a quantity of information bits in the second message. Optionally, a quantity of bits in the first bitmap in the second message may be less than or equal to a quantity of actually sent SSBs in one SS burst set. The network device may send an SSB to the terminal device in the beam sweeping manner. The network device may periodically send an SS burst set to the terminal device, and each SS burst set includes one or more SSBs.

It should be noted that a quantity of bitmaps such as the second bitmap and the third bitmap in the second message may be less than or equal to a quantity of actually sent SSBs in one SS burst set.

In this application, the first bitmap may include at least one information field. A quantity of information bits in the information field and a location of the information bits in the first bitmap are not limited in this application.

Optionally, a quantity of bits in the at least one information field is determined based on information associated with determination of the quantity of SSBs, and affected by the quantity of SSBs. The information associated with determination of the quantity of SSBs may include a plurality of identifier forms, for example, an inOneGroup field and a groupPresence field in an SSB configuration parameter ssb-PositionsInBurst. The following describes a specific implementation of the first bitmap with reference to several feasible implementations.

In a feasible implementation, a quantity of bits in an information field of the first bitmap may be determined based on an inOneGroup field (including eight bits) and a groupPresence field (including eight bits).

Optionally, the first bitmap may include a first information field and a second information field. A quantity of bits of the first information field is equal to a quantity of bits that are equal to a first value and that are in the inOneGroup field in the SSB configuration parameter ssb-PositionsInBurst, and a quantity of bits of the second information field is equal to a quantity of bits that are equal to a second value and that are in the groupPresence field in the SSB configuration parameter ssb-PositionsInBurst. In this case, the quantity of bits of the first bitmap is less than or equal to 16.

When the first value is 1, an SSB index corresponding to a k^{th} information bit of the first information field in a first order includes one or more of the following indexes: m-1, m+7, m+15, m+23, m+31, m+39, m+47, and m+55. The SSB index herein is an SSB index of a candidate SSB defined in a protocol.

The k^{th} information bit in the first order of the first information field corresponds to a second information bit whose k^{th} information bit in the first order is equal to 1 in the inOneGroup field in the SSB configuration parameter ssb-PositionsInBurst, and the second information bit is an m^{th} information bit in the first order in the inOneGroup field in the SSB configuration parameter ssb-PositionsInBurst, where k and m are positive integers.

When the second value is 1, an SSB index corresponding to a g^{th} information bit of the second information field in a second order includes one or more of the following indexes: 8(p-1), 8(p-1)+1, 8(p-1)+2, 8(p-1)+3, 8(p-1)+4, 8(p-1)+5, 8(p-1)+6, and 8(p-1)+7. The SSB index herein is an SSB index of a candidate SSB defined in a protocol.

The g^{th} information bit in the second order of the second information field corresponds to a third information bit whose g^{th} information bit in the second order is equal to 1 in the groupPresence field in the SSB configuration parameter ssb-PositionsInBurst, and the third information bit is a p^{th} information bit in the second order in the groupPresence field in the SSB configuration parameter ssb-PositionsInBurst, where p and g are positive integers.

The first value may be 0, or may be 1. The second value may be 0, or may be 1. In addition, the first value and the second value may be the same, or may be different. The first order may be a descending order, or may be an ascending order. The second order may be a descending order, or may be an ascending order. In addition, the first order and the second order may be the same, or may be different. The foregoing content is not limited in this application.

Therefore, eight candidate SSB indexes may be determined by using one information bit in the second information field, and eight candidate SSB indexes may also be determined by using one information bit in the first information field. At least one of the 16 candidate SSB indexes is the same, and the same SSB index is a determined SSB index. In this way, a unique actually sent SSB index may be determined by using one information bit in the second information field and one information bit in the first information field, and the at least one second reference signal that has a QCL relationship with the SSB has a correspondence with the two bits.

For example, when a value of one information bit in the second information field and a value of one information bit in the first information field are both 1, at least one second reference signal (or reference signal resource) corresponding to the two bits is available, or at least one second reference signal in the at least one second reference signal (or reference signal resource) corresponding to the two bits is available.

Based on the foregoing descriptions, an SSB index determined by the g^{th} information bit from the most significant bit to the least significant bit (or from the least significant bit to the most significant bit) of the second information field and the k^{th} information bit from the most significant bit to the least significant bit (or from the least significant bit to the most significant bit) of the first information field is: 8(p-1)+m-1. It is assumed that the g^{th} bit from the most significant bit to the least significant bit (or from the least significant bit to the most significant bit) of the second information field corresponds to the p^{th} information bit from the most significant bit to the least significant bit in the groupPresence field, and the k^{th} information bit from the most significant bit to the least significant bit (or from the least significant bit to the most significant bit) of the first information field corresponds to the m^{th} information bit from the most significant bit to the least significant bit in the inOneGroup field.

In another feasible implementation, the first bitmap may include one information field. A quantity of bits of the information field is equal to a quantity of bits that are equal to a first value and that are in an inOneGroup field in an SSB configuration parameter ssb-PositionsInBurst, or a quantity of bits of the information field is equal to a quantity of bits that are equal to a second value and that are in a groupPresence field in the SSB configuration parameter ssb-PositionsInBurst. For a specific implementation process, refer to the foregoing descriptions. Details are not described herein again. In this case, the quantity of bits of the first bitmap is less than or equal to 8.

For example, the k^{th} information bit from the most significant bit to the least significant bit (or from the least significant bit to the most significant bit) of the first bitmap corresponds to the k^{th} information bit that is equal to 1 from the most significant bit to the least significant bit in the inOneGroup field. It is assumed that the k^{th} information bit that is equal to 1 from the most significant bit to the least significant bit in the inOneGroup field is the m^{th} bit in the inOneGroup field. Therefore, it is considered that the k^{th} information bit from the most significant bit to the least significant bit (or from the least significant bit to the most significant bit) of the first bitmap corresponds to the m^{th} information bit from the most significant bit to the least significant bit in the inOneGroup field. Therefore, an SSB candidate index corresponding to the k^{th} information bit from the most significant bit to the least significant bit (or from the least significant bit to the most significant bit) of the first bitmap includes one or more of the following indexes: m-1, m+7, m+15, m+23, m+31, m+39, m+47, and m+55.

Actually sent SSBs in the eight SSBs corresponding to the k^{th} information bit from the most significant bit to the least significant bit (or from the least significant bit to the most significant bit) of the first bitmap are indicated based on the groupPresence field. Therefore, an SSB index of the actually sent SSB corresponding to the k^{th} information bit in the first bitmap may be determined by using the first bitmap and the groupPresence field. In this case, the k^{th} information bit in the first bitmap has a correspondence with a second reference signal that has a QCL relationship with the determined SSB corresponding to the k^{th} information bit.

In another feasible implementation, SSBs actually sent in an SS burst set are grouped into M groups in ascending order or descending order of actually sent SSB indexes (index). Each group includes one or more SSB indexes, and the SSB indexes of the M groups respectively correspond to M bits in the first bitmap. M may be configured by the network device or specified in a protocol. For example, a maximum value of M may be 8 or 12. In addition, the actually sent SSBs in an SS burst set may be evenly divided into the M groups. For example, each group includes a same quantity of SSB indexes. Alternatively, the SSBs are unevenly divided. A specific division manner may be configured by the network device or specified in a protocol.

For example, similar to the groupPresence field, if the first bitmap includes one information field, and a quantity of bits of the information field is equal to a quantity of bits that are equal to 1 and that are in the groupPresence field, the quantity of bits of the first bitmap is less than or equal to 8. The g^{th} information bit from the most significant bit to the least significant bit (or from the least significant bit to the most significant bit) of the information field, namely, the first bitmap, corresponds to the g^{th} information bit that is equal to 1 from the most significant bit to the least significant bit in the groupPresence field. It is assumed that the g^{th} information bit that is equal to 1 from the most significant bit to the least significant bit in the groupPresence field is the p^{th} bit in the groupPresence field. Therefore, it is considered that the g^{th} information bit from the most significant bit to the least significant bit (or from the least significant bit to the most significant bit) of the first bitmap corresponds to the p^{th} information bit from the most significant bit to the least significant bit in the groupPresence field. Therefore, an SSB candidate index corresponding to the g^{th} information bit from the most significant bit to the least significant bit (or from the least significant bit to the most significant bit) of the first bitmap include one or more of the following indexes: 8(p-1), 8(p-1)+1, 8(p-1)+2, 8(p-1)+3, 8(p-1)+4, 8(p-1)+5, 8(p-1)+6, and 8(p-1)+7.

Actually sent SSBs in the eight SSBs corresponding to the g^{th} information bit from the most significant bit to the least significant bit (or from the least significant bit to the most significant bit) of the first bitmap are indicated based on the inOneGroup field. Therefore, an SSB index of the actually sent SSB corresponding to the g^{th} information bit in the first bitmap may be determined by using the first bitmap and the inOneGroup field. In this case, the g^{th} information bit in the first bitmap has a correspondence with a second reference signal that has a QCL relationship with the determined SSB corresponding to the g^{th} information bit.

Based on the foregoing description, a meaning of the first bitmap may include a plurality of implementations. The following describes a specific meaning of the first bitmap by using a plurality of feasible implementations as examples.

In a feasible implementation, if a fourth information bit in the first bitmap is set to 1 (or set to 0), it indicates that at least one second reference signal in second reference signals corresponding to the fourth information bit is available. The terminal device may detect whether the network device sends the second reference signal by detecting, for example, a parameter such as signal strength, an SNR, or RSRP at a time-frequency location corresponding to the second reference signal.

In another feasible implementation, if a fourth information bit in the first bitmap is set to 0 (or 1), it indicates that all or some of second reference signals corresponding to the fourth information bit are unavailable. If the terminal device receives an information bit set to 0 from the network device, the terminal device cannot assume that the second reference signal corresponding to the fourth information bit is available.

In still another feasible implementation, if a fourth information bit in the first bitmap is set to 1 (or set to 0), it indicates that all second reference signals corresponding to the fourth information bit are available. If the terminal device receives an information bit set to 1 from the network device, the terminal device can assume (may assume) that the second reference signal corresponding to the fourth information bit is available.

In yet another feasible implementation, if a fourth information bit in the first bitmap is set to 0 (or 1), it indicates that all or some of second reference signals corresponding to the fourth information bit are unavailable. If the terminal device receives an information bit set to 0 from the network device, the terminal device cannot assume that the second reference signal corresponding to the fourth information bit is available.

Based on the foregoing description, it is considered that the second reference signal uses an SSB as a direct or indirect QCL source reference signal. Therefore, when a quantity of second reference signals is greater than a quantity of SSBs, one SSB is a QCL source reference signal of a plurality of second reference signals, or a plurality of second reference signals have QCL relationships with a same SSB. In addition, considering that the information bit in the second message is mapped to the SSB, in this application, one information bit may correspond to a plurality of second reference signals associated with one SSB, thereby reducing signaling overheads.

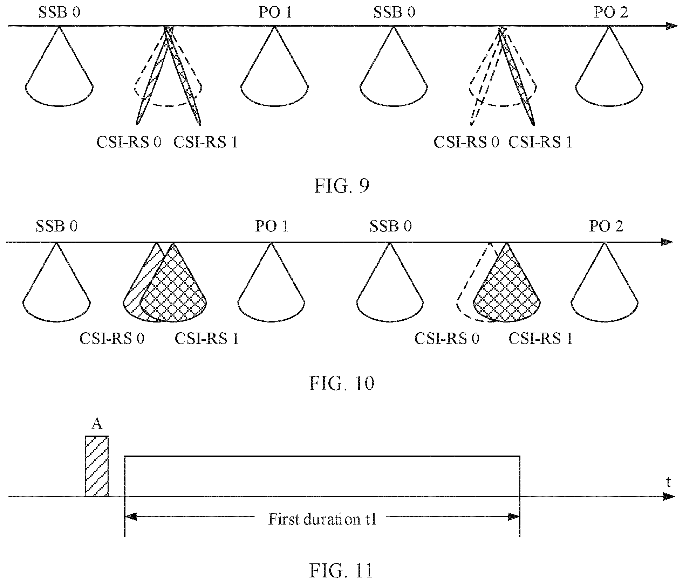

As shown in FIG. 9, when a second reference signal includes a CSI-RS, before a first paging occasion PO 1, a second reference signal that has a QCL relationship with an SSB 0 includes a CSI-RS 0 and a CSI-RS 1. In this case, both the CSI-RS 0 and the CSI-RS 1 are available, and beams/beam directions respectively corresponding to the CSI-RS 0 and the CSI-RS 1 do not overlap. Before a second paging occasion PO 2, a second reference signal that has a QCL relationship with the SSB 0 includes a CSI-RS 0 and a CSI-RS 1. In this case, the CSI-RS 0 is unavailable, the CSI-RS 1 is available, and beams/beam directions respectively corresponding to the CSI-RS 0 and the CSI-RS 1 do not overlap.

As shown in FIG. 10, when a second reference signal includes a CSI-RS, before a first paging occasion PO 1, a second reference signal that has a QCL relationship with an SSB 0 includes a CSI-RS 0 and a CSI-RS 1. In this case, both the CSI-RS 0 and the CSI-RS 1 are available, and beams/beam directions respectively corresponding to the CSI-RS 0 and the CSI-RS 1 overlap. Before a second paging occasion PO 2, a second reference signal that has a QCL relationship with the SSB 0 includes a CSI-RS 0 and a CSI-RS 1. In this case, the CSI-RS 0 is unavailable, the CSI-RS 1 is available, and beams/beam directions respectively corresponding to the CSI-RS 0 and the CSI-RS 1 overlap.

In addition, in a possible implementation, if at least one reference signal in a plurality of second reference signals associated with one SSB is available, a corresponding information bit in the first bitmap indicates that the at least one second reference signal is available.

Based on the foregoing descriptions, the second message may indicate that the availability of the at least one second reference signal that has a QCL relationship with the at least one SSB is valid within first duration, or that an information bit indicating the availability of the at least one second reference signal that has a QCL relationship with the at least one SSB is valid within first duration, so that the terminal device determines the availability of the at least one reference signal based on the indication of the second message within the first duration.

A specific representation form of the first duration is not limited in this application. Optionally, the first duration may include: at least one paging DRX cycle, where a paging DRX cycle is an interval between two adjacent paging occasions POs of a same terminal device; one or more windows in a cycle window configured by a network device or predefined; when the second message is paging DCI carried on a PDCCH or a paging PDSCH, a time period before a next paging occasion PO of a PO on which the second message is located, where an interval between the next PO and the PO on which the second message is located is duration of one DRX cycle; when the second message is paging DCI carried on a PDCCH or a paging PDSCH, a time period after a next PO of a PO on which the second message is located, where an interval between the next PO and the PO on which the second message is located is duration of one DRX cycle; or when the second message is paging DCI carried on a PDCCH or a paging PDSCH, a time period after a PO on which the second message is located.

The next paging occasion PO is a next paging occasion PO that is closest to a paging occasion PO on which the terminal device completes paging message monitoring and that also belongs to the terminal device. In other words, there is one paging DRX cycle between the paging occasion PO on which the second message is located and the next PO of the paging occasion PO on which the second message is located. In addition, a unit of the first duration may be an absolute time period, for example, a second (s) or a millisecond (ms), a quantity of frames, a quantity of subframes, a quantity of slots, a multiple of the paging DRX cycle, or the like.

It should be noted that, in this application, the first duration may be configured by the network device, or may be defined in a protocol, or may be pre-stored in the terminal device. This is not limited in this application.

With reference to FIG. 11 to FIG. 17, the following describes specific implementations of the first duration by using examples. For ease of description, in FIG. 11 to FIG. 17, t1 indicates the first duration, and A indicates the second message.

For example, as shown in FIG. 11, an information bit that is in the second message and that indicates the availability of the second reference signal is valid in a time period (namely, first duration) after the second message. Optionally, a start occasion of a time period (namely, first duration) after the second message is an end occasion of the second message.

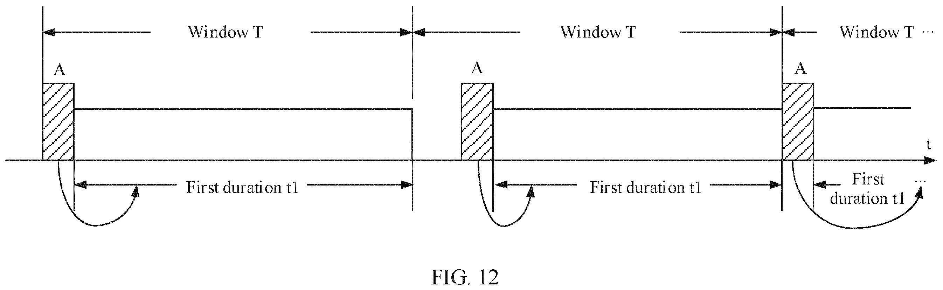

For another example, as shown in FIG. 12, the network device configures or a protocol predefines a cycle window, and an information bit that is in the second message and that indicates the availability of the second reference signal is valid in a window in which the second message is located. Optionally, an information bit that is in the second message and that indicates the availability of the second reference signal is valid in a window in which the second message is located and after the second message, or is valid in the entire window in which the second message is located. For ease of description, in FIG. 12, T indicates the window. It may be understood that, in this application, the window includes but is not limited to a time period in which the terminal device receives the second message in a window. For example, the terminal device may receive, on any occasion in a window T, the second message including the information bit that indicates the availability of the second reference signal.

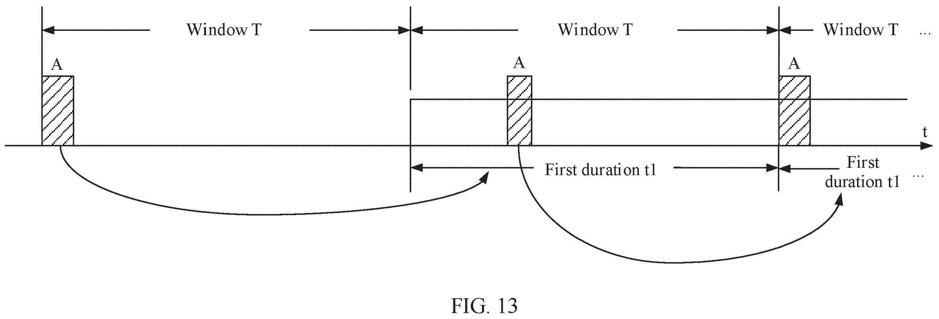

For still another example, as shown in FIG. 13, the network device configures or a protocol predefines a cycle window, and an information bit that is in the second message and that indicates the availability of the second reference signal is valid in a next window of the window in which the second message is located. For ease of description, in FIG. 13, T indicates the window. It may be understood that, in this application, the window includes but is not limited to a time period in which the terminal device receives the second message in a window. For example, the terminal device may receive, on any occasion in a window T, the second message including the information bit that indicates availability of the second reference signal.

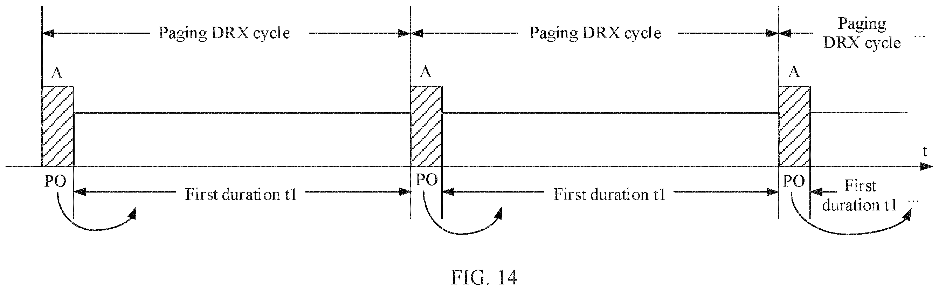

For yet another example, as shown in FIG. 14, when the second message is paging DCI carried on a PDCCH, an information bit that is in the second message and that indicates the availability of the second reference signal is valid in a time period after a paging occasion PO on which the second message is located and before a next paging occasion PO after the paging occasion PO on which the second message is located. There is one paging DRX cycle between the paging occasion PO on which the second message is located and the next paging occasion PO of the paging occasion PO on which the second message is located.

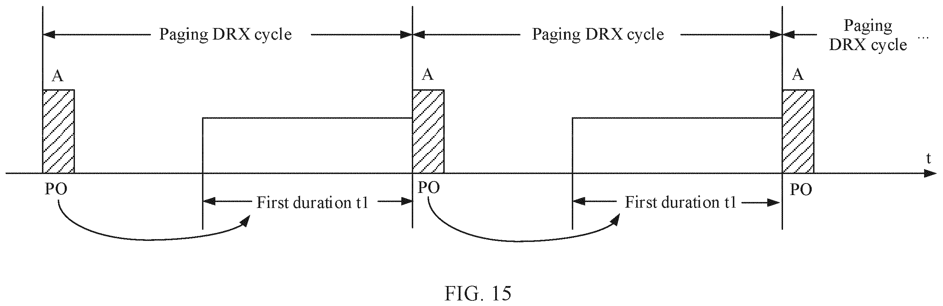

For still yet another example, as shown in FIG. 15, when the second message is paging DCI carried on a PDCCH, an information bit that is in the second message and that indicates the availability of the second reference signal is valid in a time period before a next paging occasion PO of a paging occasion PO on which the second message is located. There is one paging DRX cycle between the paging occasion PO on which the second message is located and the next paging occasion PO of the paging occasion PO on which the second message is located.

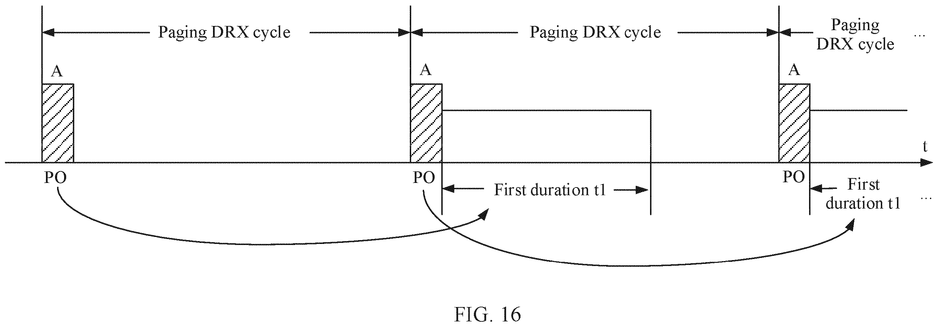

For a further example, as shown in FIG. 16, when the second message is paging DCI carried on a PDCCH, an information bit that is in the second message and that indicates the availability of the second reference signal is valid in a time period after a next paging occasion PO of a paging occasion PO on which the second message is located. There is one paging DRX cycle between the paging occasion PO on which the second message is located and the next paging occasion PO of the paging occasion PO on which the second message is located.

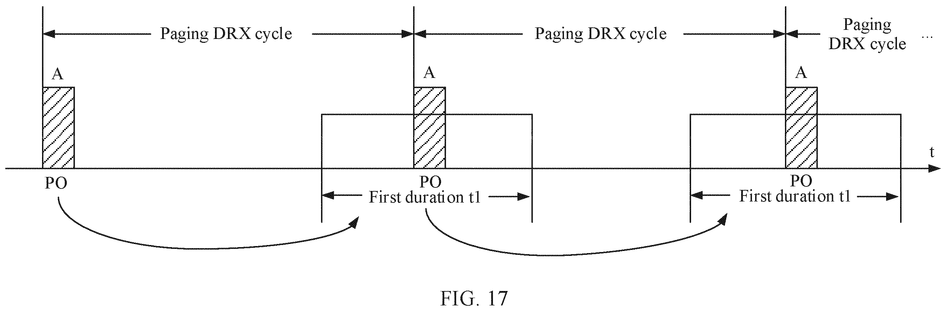

For a still further example, as shown in FIG. 17, when the second message is paging DCI carried on a PDCCH, an information bit that is in the second message and that indicates the availability of the second reference signal is valid in a time period that is after a paging occasion PO on which the second message is located and that includes a next paging occasion PO after the paging occasion PO on which the second message is located. There is one paging DRX cycle between the paging occasion PO on which the second message is located and the next paging occasion PO of the paging occasion PO on which the second message is located.

Optionally, the foregoing time period (namely, the first duration) is determined based on one or more SSBs (or one or more SS burst sets) closest to the paging occasion PO. For example, a time period (namely, first duration) before a paging occasion PO is a time period between an SSB closest to the paging occasion PO before the paging occasion PO and the paging occasion PO. A time period (namely, first duration) after a paging occasion PO is a time period between an SSB closest to the paging occasion PO after the paging occasion PO and the paging occasion PO. A time period (namely, first duration) including a paging occasion PO is a time period between an SSB closest to the paging occasion PO before the paging occasion PO and an SSB closest to the paging occasion PO after the paging occasion PO.

It may be understood that, indication information that is in the second message and that indicates the availability of the at least one second reference signal that has a QCL relationship with the at least one SSB has a valid period. The first duration is the valid period of the indication information. After the first duration, the indication information is no longer valid. The network device needs to resend the indication information that indicates the availability of the at least one second reference signal that has a QCL relationship with the at least one SSB. The terminal device needs to receive the indication information again, to determine the availability of the at least one second reference signal in a subsequent time period.

In this application, after the indication information that is received by the terminal device and that indicates the availability of the at least one second reference signal that has a QCL relationship with the at least one SSB is invalid, for example, after first duration in which the indication information is valid ends, the terminal device may not receive the information bit that indicates the availability of the at least one second reference signal that has a QCL relationship with the at least one SSB (for a specific case, refer to the foregoing content, and details are not described herein). Therefore, the following describes, by using four feasible implementations, specific implementation processes in which the terminal device continues to use the at least one second reference signal configured by the network device.

In a feasible implementation, after the first duration ends, where the indication information that is in the second message and that indicates the availability of the at least one second reference signal is valid in the first duration, in the foregoing case, the terminal device determines the availability of the at least one second reference signal in a subsequent period of time (namely, subsequent first duration) based on an information bit that is in a second message received last time and that indicates the availability of the at least one second reference signal that has a QCL relationship with the at least one SSB, until the terminal device receives again an information bit that indicates the availability of the at least one second reference signal that has a QCL relationship with the at least one SSB.

The foregoing manner can reduce indication signaling overheads. In addition, when the availability of the at least one second reference signal does not change, the network device does not need to send a second message, or does not need to send an information bit that indicates the availability of the at least one second reference signal that has a QCL relationship with the at least one SSB. Only when availability of some or all second reference signals changes, the network device sends an information bit (or sends a second message) that indicates the availability of the at least one second reference signal that has a QCL relationship with the at least one SSB. For example, when a second reference signal that has a QCL relationship with an SSB index changes from available to unavailable, the network device sends, by using the second message, an information bit indicating that the second reference signal is unavailable, for indication.

In another feasible implementation, after the first duration ends, where the indication information that is in the second message and that indicates the availability of the at least one second reference signal is valid in the first duration, in the foregoing case, the terminal device assumes that the at least one second reference signal is unavailable in a subsequent period of time, until the terminal device receives again an information bit that indicates the availability of the at least one second reference signal that has a QCL relationship with the at least one SSB.

In still another feasible implementation, after the first duration ends, where the indication information that is in the second message and that indicates the availability of the at least one second reference signal is valid in the first duration, in the foregoing case, the terminal device assumes that all at least one second reference signals are available in a subsequent period of time, until the terminal device receives again an information bit that indicates the availability of the at least one second reference signal that has a QCL relationship with the at least one SSB.

In yet another feasible implementation, after the first duration ends, where the indication information that is in the second message and that indicates the availability of the at least one second reference signal is valid in the first duration, in the foregoing case, the terminal device determines the availability of the at least one second reference signal based on the default availability of the at least one second reference signal in a subsequent period of time, until the terminal device receives again an information bit used to indicate availability of the at least one second reference signal that has a QCL relationship with the at least one SSB.

It may be understood that, in this application, that the at least one information bit in the second message corresponds to the at least one SSB may also be understood as that the at least one information bit corresponds to at least one SSB index, or the at least one information bit corresponds to at least one SSB corresponding to the at least one SSB index.

The SSB index in this application may be an SSB index defined in an existing protocol. To be specific, the SSB index indicates an index corresponding to all candidate SSBs in an SS burst set, or an index re-named based on a quantity of SSBs actually sent in an SS burst set.

For example, a maximum quantity of candidate SSBs in an SS burst set is 4, and the four candidate SSBs are indexed an SSB 0, an SSB 1, an SSB 2, and an SSB 3 respectively. The foregoing indexes are defined in the protocol. It is assumed that in a cell, the network device sends, in a broadcast manner, only an SSB corresponding to the SSB 0 and an SSB corresponding to the SSB 2 defined in the protocol, namely, two SSBs in total. The terminal device may determine a correspondence between the at least one information bit in the second message and the at least one SSB based on the SSB corresponding to the SSB 0 and the SSB corresponding to the SSB 2 defined in the protocol. Alternatively, the terminal device may determine two actually sent SSBs based on SSB indexes that are re-named in a specific order. For example, the network device may re-name the indexes of the two actually sent SSBs as an SSB 0 and an SSB 1. In this case, the terminal device may determine a correspondence between the at least one information bit in the second message and the at least one SSB based on an SSB corresponding to the re-named SSB 0 and an SSB corresponding to the re-named SSB 1.

Regardless of whether an SSB index defined in a protocol or a re-named SSB index is used, the at least one information bit in the second message corresponds to a same determined actually sent SSB.

It may be understood that, in the conventional technology, when the terminal device is in the RRC connected mode, for a semi-persistent reference signal resource configured by the network device, the network device performs activation or deactivation by sending a media access control control element (medium access control control element, MAC CE), and one MAC CE is used to activate/deactivate one reference signal resource set. However, in an embodiment of this application, the at least one information bit or the one or more bitmaps in the second message indicate the availability of the at least one second reference signal that has a QCL relationship with the at least one SSB. This has the following advantages.
(1) Availability of a reference signal may be indicated at a finer granularity of a beam/beam direction corresponding to an SSB, so that the terminal device can determine the availability of the at least one second reference signal in the beam/beam direction corresponding to the at least one SSB.
(2) By using a "bridge" function of the SSB, the at least one information bit (for example, in a bitmap manner) corresponds to at least one SSB (or SSB index), and further corresponds to the at least one second reference signal that has a QCL relationship with the at least one SSB (or SSB index). Therefore, availability of all configured second reference signals can be indicated by using a small quantity of bits, and indication signaling overheads can be reduced in comparison with activation/deactivation of a MAC CE in an RRC connected mode.

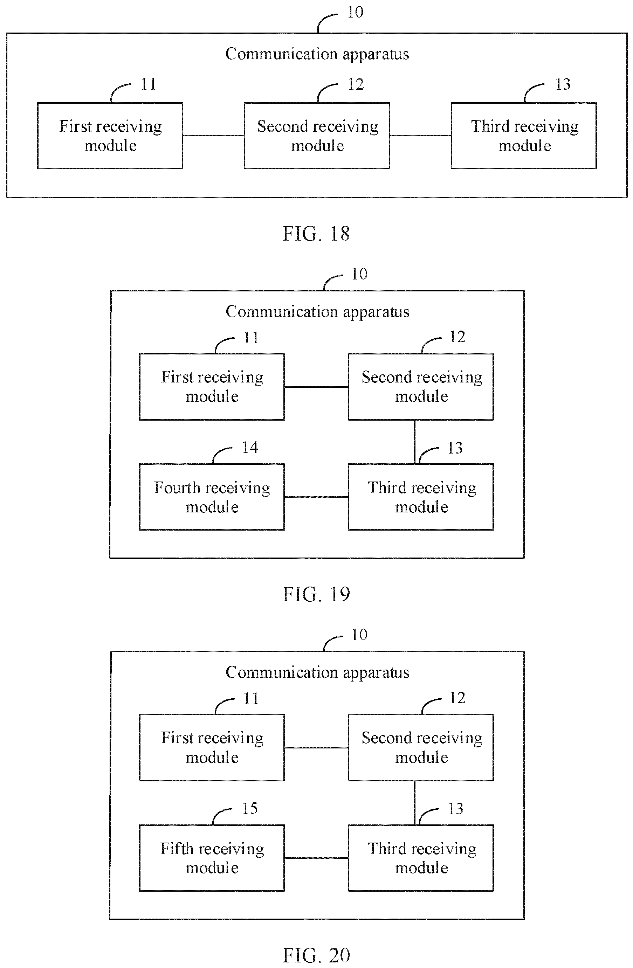

For example, this application further provides a communication apparatus. FIG. 18 is a schematic diagram of a structure of a communication apparatus according to an embodiment of this application. The communication apparatus 10 in this application is configured to implement an operation corresponding to the terminal device or a chip in the terminal device in any one of the foregoing method embodiments. As shown in FIG. 18, the communication apparatus 10 may include a first receiving module 11, a second receiving module 12, and a third receiving module 13.

The first receiving module 11 is configured to receive a first message from a network device. The first message includes configuration information of at least one first reference signal.

The second receiving module 12 is configured to receive a second message from the network device. The second message indicates availability of at least one second reference signal. The at least one second reference signal has a QCL relationship with at least one synchronization signal/physical broadcast channel block SSB. The at least one first reference signal includes the at least one second reference signal.

The third receiving module 13 is configured to: receive, from the network device and based on the configuration information and the second message, a reference signal that is available in the at least one second reference signal.

FIG. 19 is a schematic diagram of a structure of another communication apparatus according to an embodiment of this application. As shown in FIG. 19, based on the structure shown in FIG. 18, the communication apparatus 10 in this application may further include a fourth receiving module 14.

The fourth receiving module 14 is configured to receive first information from the network device. The first information is used to determine a correspondence between at least one information bit in the second message and at least one SSB, or determine a correspondence between at least one information bit in the second message and an SSB index corresponding to the at least one SSB.

FIG. 20 is a schematic diagram of a structure of still another communication apparatus according to an embodiment of this application. As shown in FIG. 20, based on the structure shown in FIG. 18, the communication apparatus 10 in this application may further include a fifth receiving module 15.

The fifth receiving module 11 is configured to receive a third message from the network device. The third message is used to configure default availability of the at least one second reference signal.

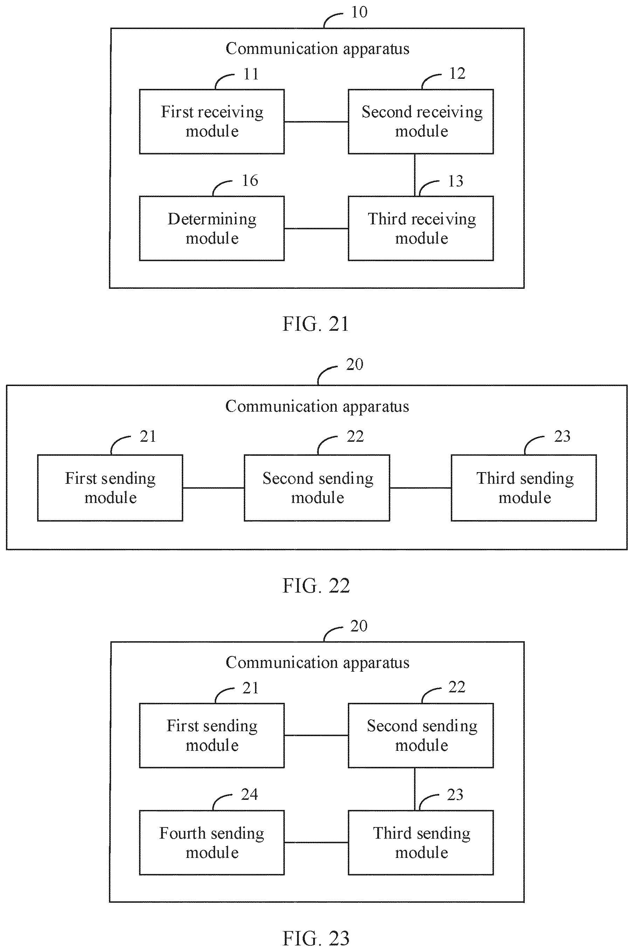

FIG. 21 is a schematic diagram of a structure of yet another communication apparatus according to an embodiment of this application. As shown in FIG. 21, based on the structure shown in FIG. 18, the communication apparatus 10 in this application may further include a determining module 16.

The determining module 16 is configured to: when the second receiving module 12 has not received second message or second message does not include an information bit that indicates the availability of the at least one second reference signal, determine the availability of the at least one second reference signal based on an information bit that is in a second message received last time and that indicates the availability of the at least one second reference signal.

The determining module 16 is configured to: when the second receiving module 12 has not received second message or second message does not include an information bit that indicates the availability of the at least one second reference signal, determine, based on the default availability of the at least one second reference signal, the availability of the at least one second reference signal.

The determining module 16 is configured to: when the second receiving module 12 has not received second message or second message does not include an information bit that indicates the availability of the at least one second reference signal, determine that the at least one second reference signal is unavailable.

The determining module 16 is configured to: when the second receiving module 12 has not received second message or second message does not include an information bit that indicates the availability of the at least one second reference signal, determine that the at least one second reference signal is available.

The determining module 16 is configured to: when the second receiving module 12 has not received second message or second message does not include an information bit that indicates the availability of the at least one second reference signal, determine that at least one reference signal in the at least one second reference signal is available.

In some embodiments, the configuration information includes second information. The second information is used to determine the QCL relationship between the at least one second reference signal and the at least one SSB, and/or determine a QCL relationship between the at least one second reference signal and at least one reference signal other than the at least one SSB, and the at least one reference signal other than the at least one SSB has a QCL relationship with the at least one SSB.

In some embodiments, when a bitmap in the second message indicates the availability of the at least one second reference signal, the second message is an SIB 1 or another SIB of system information. Alternatively, the second message is downlink control information DCI carried on a physical downlink control channel PDCCH or information carried on a physical downlink shared channel PDSCH.

In some embodiments, a quantity of bitmaps in the second message is n, n is greater than or equal to 1 and less than N, and n and N are positive integers. The bitmap indicates the availability of the at least one second reference signal, and the bitmap includes at least one information bit.

In some embodiments, when the second message is paging DCI carried on a PDCCH, a first bitmap in the second message is the same or different on each PDCCH monitoring occasion of any paging occasion PO.

In some embodiments, when the second message is paging DCI carried on a PDCCH, a quantity of bits of the first bitmap in the second message is the same on different POs.

In some embodiments, when the terminal device is in the radio resource control RRC idle mode or the radio resource control RRC inactive mode, a type of the at least one second reference signal includes: at least one of a tracking reference signal TRS, a channel state information reference signal CSI-RS, a synchronization signal/physical broadcast channel block SSB, or a secondary synchronization signal SSS.

In some embodiments, the configuration information is used to configure, based on a function and the type of the at least one second reference signal, a maximum quantity of second reference signals that have a same function and that are of a same type, or a maximum quantity of second reference signals that have a same function and that are of a same type is predefined.

In some embodiments, the configuration information is used to configure, based on the function and the type of the at least one second reference signal, a maximum quantity of reference signal resource sets to which second reference signals that have a same function and that are of a same type belong, or a maximum quantity of reference signal resource sets to which second reference signals that have a same function and that are of a same type belong is predefined.

In some embodiments, the second message includes the first bitmap and a second bitmap. An information bit in the first bitmap corresponds to a first function of the at least one second reference signal, and an information bit in the second bitmap corresponds to a second function of the at least one second reference signal.

In some embodiments, the quantity of bits of the first bitmap in the second message is less than or equal to a quantity of synchronization signal/physical broadcast channel blocks SSBs sent in a synchronization signal/physical broadcast channel block set.

In some embodiments, the first bitmap includes at least one information field, and a quantity of bits in the information field is determined based on information associated with determination of the quantity of SSBs.

In some embodiments, the first bitmap includes a first information field and a second information field. A quantity of bits of the first information field is equal to a quantity of bits that are equal to a first value and that are in an inOneGroup field in an SSB configuration parameter ssb-PositionsInBurst, and a quantity of bits of the second information field is equal to a quantity of bits that are equal to a second value and that are in a groupPresence field in the SSB configuration parameter ssb-PositionsInBurst. Alternatively, the first bitmap includes one information field. A quantity of bits of the first bitmap is equal to a quantity of bits that are equal to a first value and that are in an inOneGroup field in an SSB configuration parameter ssb-PositionsInBurst, or a quantity of bits of the first bitmap is equal to a quantity of bits that are equal to a second value and that are in a groupPresence field in the SSB configuration parameter ssb-PositionsInBurst.

In some embodiments, the second message indicates that the availability of the at least one second reference signal is valid within first duration.

In some embodiments, the first duration includes: at least one paging discontinuous reception DRX cycle; one or more windows in a cycle window configured by the network device or predefined; when the second message is paging DCI carried on a PDCCH, a time period before a next paging occasion PO of a PO on which the second message is located, where an interval between the next PO and the PO on which the second message is located is duration of one DRX cycle; when the second message is paging DCI carried on a PDCCH, a time period after a next PO of a PO on which the second message is located, where an interval between the next PO and the PO on which the second message is located is duration of one DRX cycle; or when the second message is paging DCI carried on a PDCCH, a time period after a PO on which the second message is located.

The communication apparatus in this application may be configured to execute technical solutions of the terminal device or the chip in the terminal device in the method embodiments shown in FIG. 1 to FIG. 17. Implementation principles and technical effects thereof are similar. For operations implemented by the modules, further refer to related descriptions in the method embodiments. Details are not described herein again. The module herein may alternatively be replaced with a component or a circuit.

For example, this application further provides a communication apparatus. FIG. 22 is a schematic diagram of a structure of a still further communication apparatus according to an embodiment of this application. The communication apparatus 20 in this application is configured to implement an operation corresponding to the network device or a chip in the network device in any one of the foregoing method embodiments. As shown in FIG. 22, the communication apparatus 20 may include a first sending module 21, a second sending module 22, and a third sending module 23.

The first sending module 21 is configured to send a first message to a terminal device. The first message includes configuration information of at least one first reference signal.

The second sending module 22 is configured to send a second message to the terminal device. The second message indicates availability of at least one second reference signal. The at least one second reference signal has a QCL relationship with at least one synchronization signal/physical broadcast channel block SSB. The at least one first reference signal includes the at least one second reference signal.

The third sending module 23 is configured to send the at least one second reference signal to the terminal device.

FIG. 23 is a schematic diagram of a structure of a further communication apparatus according to an embodiment of this application. As shown in FIG. 23, based on the structure shown in FIG. 22, the communication apparatus 20 in this application may further include a fourth sending module 24.

The fourth sending module 24 is configured to send first information to the terminal device. The first information is used to determine a correspondence between at least one information bit in the second message and at least one SSB, or determine a correspondence between at least one information bit in the second message and an SSB index corresponding to the at least one SSB.

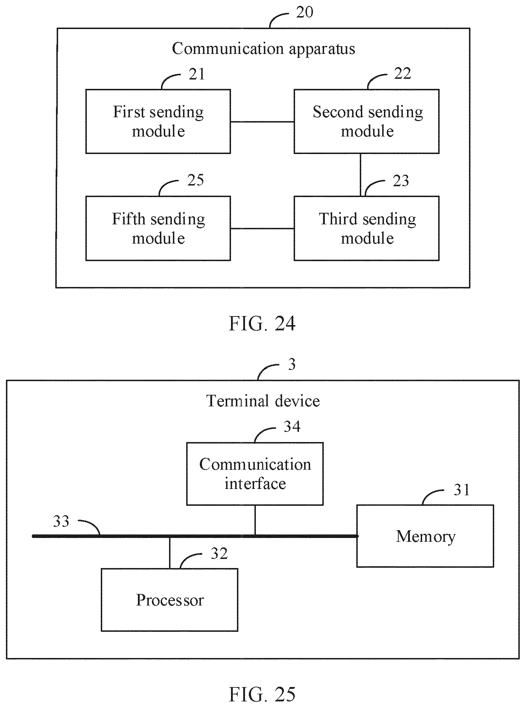

FIG. 24 is a schematic diagram of a structure of a still further communication apparatus according to an embodiment of this application. As shown in FIG. 24, based on the structure shown in FIG. 22, the communication apparatus 20 in this application may further include a fifth sending module 25.

The fifth sending module 25 is configured to send a third message to the terminal device. The third message is used to configure default availability of the at least one second reference signal.

In some embodiments, the configuration information includes second information. The second information is used to determine the QCL relationship between the at least one second reference signal and the at least one SSB, and/or determine a QCL relationship between the at least one second reference signal and at least one reference signal other than the at least one SSB, and the at least one reference signal other than the at least one SSB has a QCL relationship with the at least one SSB.

In some embodiments, when a bitmap in the second message indicates the availability of the at least one second reference signal, the second message is an SIB 1 or another SIB of system information. Alternatively, the second message is downlink control information DCI carried on a physical downlink control channel PDCCH or information carried on a physical downlink shared channel PDSCH.

In some embodiments, a quantity of bitmaps in the second message is n, n is greater than or equal to 1 and less than N, and n and N are positive integers. The bitmap indicates the availability of the at least one second reference signal, and the bitmap includes at least one information bit.

In some embodiments, when the second message is paging DCI carried on a PDCCH, a first bitmap in the second message is the same or different on each PDCCH monitoring occasion of any paging occasion PO.

In some embodiments, when the second message is paging DCI carried on a PDCCH, a quantity of bits of the first bitmap in the second message is the same on different POs.

In some embodiments, when the terminal device is in the radio resource control RRC idle mode or the radio resource control RRC inactive mode, a type of the at least one second reference signal includes: at least one of a tracking reference signal TRS, a channel state information reference signal CSI-RS, a synchronization signal/physical broadcast channel block SSB, or a secondary synchronization signal SSS.

In some embodiments, the configuration information is used to configure, based on a function and the type of the at least one second reference signal, a maximum quantity of second reference signals that have a same function and that are of a same type, or a maximum quantity of second reference signals that have a same function and that are of a same type is predefined.

In some embodiments, the configuration information is used to configure, based on the function and the type of the at least one second reference signal, a maximum quantity of reference signal resource sets to which second reference signals that have a same function and that are of a same type belong, or a maximum quantity of reference signal resource sets to which second reference signals that have a same function and that are of a same type belong is predefined.

In some embodiments, the second message includes the first bitmap and a second bitmap. An information bit in the first bitmap corresponds to a first function of the at least one second reference signal, and an information bit in the second bitmap corresponds to a second function of the at least one second reference signal.

In some embodiments, the quantity of bits of the first bitmap in the second message is less than or equal to a quantity of synchronization signal/physical broadcast channel blocks SSBs sent in a synchronization signal/physical broadcast channel block set.

In some embodiments, the first bitmap includes at least one information field, and a quantity of bits in the information field is determined based on information associated with determination of the quantity of SSBs.

In some embodiments, the first bitmap includes a first information field and a second information field. A quantity of bits of the first information field is equal to a quantity of bits that are equal to a first value and that are in an inOneGroup field in an SSB configuration parameter ssb-PositionsInBurst, and a quantity of bits of the second information field is equal to a quantity of bits that are equal to a second value and that are in a groupPresence field in the SSB configuration parameter ssb-PositionsInBurst. Alternatively, the first bitmap includes one information field. A quantity of bits of the first bitmap is equal to a quantity of bits that are equal to a first value and that are in an inOneGroup field in an SSB configuration parameter ssb-PositionsInBurst, or a quantity of bits of the first bitmap is equal to a quantity of bits that are equal to a second value and that are in a groupPresence field in the SSB configuration parameter ssb-PositionsInBurst.

In some embodiments, the second message indicates that the availability of the at least one second reference signal is valid within first duration.

In some embodiments, the first duration includes: at least one paging discontinuous reception DRX cycle; one or more windows in a cycle window configured by the network device or predefined; when the second message is paging DCI carried on a PDCCH, a time period before a next paging occasion PO of a PO on which the second message is located, where an interval between the next PO and the PO on which the second message is located is duration of one DRX cycle; when the second message is paging DCI carried on a PDCCH, a time period after a next PO of a PO on which the second message is located, where an interval between the next PO and the PO on which the second message is located is duration of one DRX cycle; or when the second message is paging DCI carried on a PDCCH, a time period after a PO on which the second message is located.

The communication apparatus in this application may be configured to execute technical solutions of the network device or the chip in the network device in the method embodiments shown in FIG. 1 to FIG. 17. Implementation principles and technical effects thereof are similar. For operations implemented by the modules, further refer to related descriptions in the method embodiments. Details are not described herein again. The module herein may alternatively be replaced with a component or a circuit.

In this application, functional modules of the communication apparatus may be obtained through division based on the foregoing method examples. For example, each functional module may be obtained through division in correspondence to each function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

FIG. 25 is a schematic diagram of a structure of a terminal device according to an embodiment of this application. The terminal device may include:
a memory 31, configured to store program instructions, where the memory 31 may be a flash memory (flash memory); and
a processor 32, configured to invoke and execute the program instructions in the memory 31, to implement steps corresponding to the terminal device or a chip in the terminal device in the communication method in FIG. 1 to FIG. 17. For details, refer to the related descriptions in the foregoing method embodiments.

The terminal device may further include a communication interface 33, namely, an input/output interface. The communication interface 33 may include an independent output interface and an independent input interface, or may be an integrated interface integrating an input and an output. The output interface is configured to output data, and the input interface is configured to obtain input data. The output data is a generic term of an output in the foregoing method embodiments, and the input data is a generic term of an input in the foregoing method embodiments.

The terminal device may be configured to perform steps and/or procedures corresponding to the terminal device or the chip in the terminal device in the foregoing method embodiments.

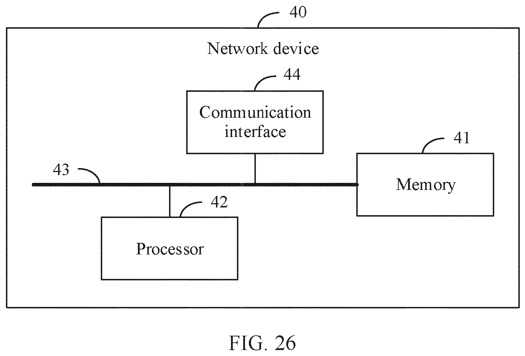

FIG. 26 is a schematic diagram of a structure of a network device according to an embodiment of this application. The network device 40 includes: a memory 41, configured to store program instructions, where the memory 41 may be a flash memory (flash memory); and
a processor 42, configured to invoke and execute the program instructions in the memory 41, to implement steps corresponding to the network device or a chip in the network device in the communication method in FIG. 1 to FIG. 17. For details, refer to the related descriptions in the foregoing method embodiments.

The network device may further include a communication interface 43, namely, an input/output interface. The communication interface 43 may include an independent output interface and an independent input interface, or may be an integrated interface integrating an input and an output. The output interface is configured to output data, and the input interface is configured to obtain input data. The output data is a generic term of an output in the foregoing method embodiments, and the input data is a generic term of an input in the foregoing method embodiments.

The network device may be configured to perform steps and/or procedures corresponding to the network device or the chip in the network device in the foregoing method embodiments.

This application further provides a readable storage medium. The readable storage medium stores executable instructions. When at least one processor in a terminal device executes the executable instructions, the terminal device performs the communication method in the foregoing method embodiments.

This application further provides a readable storage medium. The readable storage medium stores executable instructions. When at least one processor in a network device executes the executable instructions, the network device performs the communication method in the foregoing method embodiments.

This application further provides a program product. The program product includes executable instructions, and the executable instructions are stored in a readable storage medium. At least one processor in a terminal device may read the executable instructions from the readable storage medium. The at least one processor executes the executable instructions, so that the terminal device performs the communication method in the foregoing method embodiments.

This application further provides a program product. The program product includes executable instructions, and the executable instructions are stored in a readable storage medium. At least one processor in a network device may read the executable instructions from the readable storage medium. The at least one processor executes the executable instructions, so that the network device performs the communication method in the foregoing method embodiments.

This application further provides a chip. The chip is connected to a memory, or a memory is integrated into the chip. When a software program stored in the memory is executed, the communication method in the foregoing method embodiments is implemented.

A person of ordinary skill in the art may understand that all or some of the foregoing embodiments may be implemented by using software, hardware, firmware. or any combination thereof. When the software is used to implement the embodiments, all or some of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, a computer, a server, or a data center to another website, another computer, another server, or another data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, DVD), a semiconductor medium (for example, a solid state disk (Solid State Disk, SSD)), or the like.

## Claims

1. A communication method, comprising:
receiving (S101) a first message from a network device, wherein the first message comprises configuration information of at least one first reference signal;
receiving (S102) a second message from the network device, wherein the second message indicates availability of at least one second reference signal, the at least one second reference signal has a quasi co-location, QCL, relationship with at least one synchronization signal/physical broadcast channel block, SSB, and the at least one first reference signal comprises the at least one second reference signal; and
receiving (S104), from the network device and based on the configuration information and the second message, a reference signal that is available in the at least one second reference signal,
wherein the method further comprises:
receiving a third information from the network device, wherein the third information is used to configure a correspondence between the at least one information bit in the second message and the at least one second reference signal.

2. The method according to claim 1, wherein the configuration information comprises second information, the second information is used to determine the QCL relationship between the at least one second reference signal and the at least one SSB.

3. The method according to claim 1 or 2, wherein a bitmap in the second message indicates the availability of the at least one second reference signal, and the second message is downlink control information, DCI, carried on a physical downlink control channel, PDCCH.

4. The method according to claims 1 to 3, wherein the terminal device is in a radio resource control, RRC, idle mode or a RRC inactive mode, a type of the at least one second reference signal comprises at least one of:
a tracking reference signal, TRS, a channel state information reference signal, CSI-RS, a synchronization signal/physical broadcast channel block, SSB, or a secondary synchronization signal, SSS.

5. The method according to any one of claims 1 to 4, wherein the second message indicates that the availability of the at least one second reference signal is valid within first duration.

6. The method according to claim 5, wherein the first duration is at least one paging discontinuous reception, DRX, cycle; or
one or more windows in a cycle window configured by the network device.

7. A communication method, comprising:
sending (S101) a first message to a terminal device, wherein the first message comprises configuration information of at least one first reference signal;
sending (S102) a second message to the terminal device, wherein the second message indicates availability of at least one second reference signal, the at least one second reference signal has a quasi co-location, QCL, relationship with at least one synchronization signal/physical broadcast channel block, SSB, and the at least one first reference signal comprises the at least one second reference signal; and
sending (S103), to the terminal device, a reference signal that is available in the at least one second reference signal,
wherein the method further comprises:
sending a third information to the terminal device, wherein the third information is used to configure a correspondence between the at least one information bit in the second message and the at least one second reference signal.

8. The method according to claim 7, wherein the configuration information comprises second information, the second information is used to determine the QCL relationship between the at least one second reference signal and the at least one SSB.

9. The method according to claim 7 or 8, wherein the terminal device is in a radio resource control, RRC, idle mode or a RRC inactive mode, a type of the at least one second reference signal comprises at least one of:
a tracking reference signal, TRS, a channel state information reference signal, CSI-RS, a synchronization signal/physical broadcast channel block, SSB, or a secondary synchronization signal, SSS.

10. The method according to any one of claims 7 to 9, wherein
the second message indicates that the availability of the at least one second reference signal is valid within first duration.

11. The method according to claim 10, wherein the first duration is
at least one paging discontinuous reception, DRX, cycle; or
one or more windows in a cycle window configured by the network device.

12. An apparatus, which is configured to perfom the method according to any one of claims 1 to 6, or the method according to any one of claims 7 to 11.

13. A computer readable storage medium, wherein the computer readable storage medium stores executable instructions, and when the executable instructions are executed by at least one processor, cause the processor to perform the communication
method according to any one of claims 1 to 6 or any one of claims 7 to 11.

## Patentansprüche

1. Kommunikationsverfahren, das Folgendes umfasst:
Empfangen (S101) einer ersten Nachricht von einer Netzvorrichtung, wobei die erste Nachricht Konfigurationsinformationen mindestens eines ersten Referenzsignals umfasst;
Empfangen (S102) einer zweiten Nachricht von der Netzvorrichtung, wobei die zweite Nachricht eine Verfügbarkeit mindestens eines zweiten Referenzsignals angibt, das mindestens eine zweite Referenzsignal eine "Quasi-Co-Location"- bzw. QCL-Beziehung mit mindestens einem Synchronisationssignal-/Physischer-Broadcast-Kanal-Block bzw. SSB aufweist und das mindestens eine erste Referenzsignal das mindestens eine zweite Referenzsignals umfasst; und
Empfangen (S104), von der Netzvorrichtung und basierend auf den Konfigurationsinformationen und der zweiten Nachricht, eines Referenzsignals, das in dem mindestens einen zweiten Referenzsignal verfügbar ist,
wobei das Verfahren ferner Folgendes umfasst:
Empfangen einer dritten Information von der Netzvorrichtung, wobei die dritte Information verwendet wird, um eine Entsprechung zwischen dem mindestens einen Informationsbit in der zweiten Nachricht und dem mindestens einen zweiten Referenzsignal zu konfigurieren.

2. Verfahren nach Anspruch 1, wobei die Konfigurationsinformationen zweite Informationen umfassen, wobei die zweiten Informationen verwendet werden, um die QCL-Beziehung zwischen dem mindestens einen zweiten Referenzsignal und dem mindestens einen SSB zu bestimmen.

3. Verfahren nach Anspruch 1 oder 2, wobei eine Bitmap in der zweiten Nachricht die Verfügbarkeit des mindestens einen zweiten Referenzsignals angibt und es sich bei der zweiten Nachricht um auf einem physischen Downlink-Steuerkanal bzw. PDCCH geführte Downlink-Steuerinformationen bzw. DCI handelt.

4. Verfahren nach den Ansprüchen 1 bis 3, wobei sich die Endgerätevorrichtung in einem Funkressourcensteuerungs- bzw. RRC-Ruhemodus oder einem RRC-Inaktivmodus befindet, wobei ein Typ des mindestens einen zweiten Referenzsignals mindestens eines der Folgenden umfasst:
ein Verfolgungsreferenzsignal bzw. TRS, ein Kanalzustandsinformationsreferenzsignal bzw. CSI-RS, ein Synchronisationssignal-/Physischer-Broadcast-Kanal-Block bzw. SSB oder ein sekundäres Synchronisationssignal bzw. SSS.

5. Verfahren nach einem der Ansprüche 1 bis 4, wobei die zweite Nachricht angibt, dass die Verfügbarkeit des mindestens einen zweiten Referenzsignals innerhalb einer ersten Dauer gültig ist.

6. Verfahren nach Anspruch 5, wobei es sich bei der ersten Dauer um mindestens einen Diskontinuierlicher-Empfang- bzw. DRX-Paging-Zyklus; oder
ein oder mehrere Fenster in einem durch die Netzvorrichtung konfigurierten Zyklusfenster handelt.

7. Kommunikationsverfahren, das Folgendes umfasst:
Senden (S101) einer ersten Nachricht an eine Endgerätevorrichtung, wobei die erste Nachricht Konfigurationsinformationen mindestens eines ersten Referenzsignals umfasst;
Senden (S102) einer zweiten Nachricht an die Endgerätevorrichtung, wobei die zweite Nachricht eine Verfügbarkeit mindestens eines zweiten Referenzsignals angibt, das mindestens eine zweite Referenzsignal eine "Quasi-Co-Location"- bzw. QCL-Beziehung mit mindestens einem Synchronisationssignal-/Physischer-Broadcast-Kanal-Block bzw. SSB aufweist und das mindestens eine erste Referenzsignal das mindestens eine zweite Referenzsignals umfasst; und
Senden (S103), an die Endgerätevorrichtung, eines Referenzsignals, das in dem mindestens einen zweiten Referenzsignal verfügbar ist,
wobei das Verfahren ferner Folgendes umfasst:
Senden einer dritten Information an die Endgerätevorrichtung, wobei die dritte Information verwendet wird, um eine Entsprechung zwischen dem mindestens einen Informationsbit in der zweiten Nachricht und dem mindestens einen zweiten Referenzsignal zu konfigurieren.

8. Verfahren nach Anspruch 7, wobei die Konfigurationsinformationen zweite Informationen umfassen, wobei die zweiten Informationen verwendet werden, um die QCL-Beziehung zwischen dem mindestens einen zweiten Referenzsignal und dem mindestens einen SSB zu bestimmen.

9. Verfahren nach Anspruch 7 oder 8, wobei sich die Endgerätevorrichtung in einem Funkressourcensteuerungs- bzw. RRC-Ruhemodus oder einem RRC-Inaktivmodus befindet, wobei ein Typ des mindestens einen zweiten Referenzsignals mindestens eines der Folgenden umfasst:
ein Verfolgungsreferenzsignal bzw. TRS, ein Kanalzustandsinformationsreferenzsignal bzw. CSI-RS, ein Synchronisationssignal-/Physischer-Broadcast-Kanal-Block bzw. SSB oder ein sekundäres Synchronisationssignal bzw. SSS.

10. Verfahren nach einem der Ansprüche 7 bis 9, wobei
die zweite Nachricht angibt, dass die Verfügbarkeit des mindestens einen zweiten Referenzsignals innerhalb einer ersten Dauer gültig ist.

11. Verfahren nach Anspruch 10, wobei es sich bei der ersten Dauer um Folgendes handelt:
mindestens ein Diskontinuierlicher-Empfang- bzw. DRX-Paging-Zyklus; oder
ein oder mehrere Fenster in einem durch die Netzvorrichtung konfigurierten Zyklusfenster.

12. Einrichtung, die dazu ausgelegt ist, das Verfahren nach einem der Ansprüche 1 bis 6 oder das Verfahren nach einem der Ansprüche 7 bis 11 durchzuführen.

13. Computerlesbares Speichermedium, wobei das computerlesbare Speichermedium ausführbare Anweisungen speichert und eine Ausführung der ausführbaren Anweisungen durch mindestens einen Prozessor bewirkt, dass der Prozessor das Kommunikationsverfahren nach einem der Ansprüche 1 bis 6 oder einem der Ansprüche 7 bis 11 durchführt.

## Revendications

1. Procédé de communication, comprenant :
la réception (S101) d'un premier message en provenance d'un dispositif de réseau, le premier message comprenant des informations de configuration d'au moins un premier signal de référence ;
la réception (S102) d'un deuxième message en provenance du dispositif de réseau, le deuxième message indiquant la disponibilité d'au moins un deuxième signal de référence, l'au moins un deuxième signal de référence présentant une relation de quasi-colocalisation, QCL, avec au moins un bloc de signaux de synchronisation/canal physique de diffusion, SSB, et l'au moins un premier signal de référence comprenant l'au moins un deuxième signal de référence ; et
la réception (S104), en provenance du dispositif de réseau et sur la base des informations de configuration et du deuxième message, d'un signal de référence qui est disponible dans l'au moins un deuxième signal de référence,
le procédé comprenant en outre :
la réception de troisièmes informations en provenance du dispositif de réseau, les troisièmes informations étant utilisées pour configurer une correspondance entre l'au moins un bit d'information dans le deuxième message et l'au moins un deuxième signal de référence.

2. Procédé selon la revendication 1, dans lequel les informations de configuration comprennent des deuxièmes informations, les deuxièmes informations sont utilisées pour déterminer la relation QCL entre l'au moins un deuxième signal de référence et l'au moins un SSB.

3. Procédé selon la revendication 1 ou 2, dans lequel un bitmap dans le deuxième message indique la disponibilité de l'au moins un deuxième signal de référence, et le deuxième message correspond à des informations de contrôle en liaison descendante, DCI, véhiculées sur un canal physique de contrôle en liaison descendante, PDCCH.

4. Procédé selon les revendications 1 à 3, dans lequel le dispositif terminal se trouve en mode veille de contrôle des ressources radio, dit RRC, ou en mode inactif RRC, un type de l'au moins un deuxième signal de référence comprend :
un signal de référence de suivi, TRS, et/ou un signal de référence d'informations d'état de canal, CSI-RS, et/ou un bloc de signaux de synchronisation/canal physique de diffusion, SSB, et/ou un signal de synchronisation secondaire, dit SSS.

5. Procédé selon l'une quelconque des revendications 1 à 4, dans lequel le deuxième message indique que la disponibilité de l'au moins un deuxième signal de référence est valide au sein d'une première durée.

6. Procédé selon la revendication 5, dans lequel la première durée correspond à au moins un cycle de réception discontinue, DRX, en paging ; ou
une ou plusieurs fenêtres dans une fenêtre de cycle configurée par le dispositif de réseau.

7. Procédé de communication, comprenant :
l'envoi (S101) d'un premier message à un dispositif terminal, le premier message comprenant des informations de configuration d'au moins un premier signal de référence ;
l'envoi (S102) d'un deuxième message au dispositif terminal, le deuxième message indiquant la disponibilité d'au moins un deuxième signal de référence, l'au moins un deuxième signal de référence présentant une relation de quasi-colocalisation, QCL,
avec au moins un bloc de signaux de synchronisation/canal physique de diffusion, SSB, et l'au moins un premier signal de référence comprenant l'au moins un deuxième signal de référence ; et
l'envoi (S103), au dispositif terminal, d'un signal de référence qui est disponible dans l'au moins un deuxième signal de référence,
le procédé comprenant en outre :
l'envoi de troisièmes informations au dispositif terminal, les troisièmes informations étant utilisées pour configurer une correspondance entre l'au moins un bit d'information dans le deuxième message et l'au moins un deuxième signal de référence.

8. Procédé selon la revendication 7, dans lequel les informations de configuration comprennent des deuxièmes informations, les deuxièmes informations sont utilisées pour déterminer la relation QCL entre l'au moins un deuxième signal de référence et l'au moins un SSB.

9. Procédé selon la revendication 7 ou 8, dans lequel le dispositif terminal se trouve en mode veille de contrôle des ressources radio, RRC, ou en mode inactif RRC, un type de l'au moins un deuxième signal de référence comprend :
un signal de référence de suivi, TRS, et/ou un signal de référence d'informations d'état de canal, CSI-RS, et/ou un bloc de signaux de synchronisation/canal physique de diffusion, SSB, et/ou un signal de synchronisation secondaire, SSS.

10. Procédé selon l'une quelconque des revendications 7 à 9, dans lequel le deuxième message indique que la disponibilité de l'au moins un deuxième signal de référence est valide au sein d'une première durée.

11. Procédé selon la revendication 10, dans lequel la première durée correspond à au moins un cycle de réception discontinue, DRX, en paging ; ou
une ou plusieurs fenêtres dans une fenêtre de cycle configurée par le dispositif de réseau.

12. Appareil, configuré pour réaliser le procédé selon l'une quelconque des revendications 1 à 6, ou le procédé selon l'une quelconque des revendications 7 à 11.

13. Support de stockage lisible par ordinateur, le support de stockage lisible par ordinateur stockant des instructions exécutables, et les instructions exécutables, lorsqu'elles sont exécutées par au moins un processeur, amenant le processeur à réaliser le procédé de communication selon l'une quelconque des revendications 1 à 6 ou l'une quelconque des revendications 7 à 11.
